# EUROPÄISCHE PATENTSCHRIFT

(11) **EP 2 910 342 B1**
(45) Veröffentlichungstag und Bekanntmachung des Hinweises auf die Patenterteilung: **07.03.2018**
(21) Anmeldenummer: 14200388.8
(22) Anmeldetag: 29.12.2014
(51) Int. Cl.: B25F 5/02

(54) **Handwerkzeugmaschine**
Handheld machine tool
Machine-outil portative

(30) Priorität: 27.01.2014 DE 102014201436
(43) Veröffentlichungstag der Anmeldung: 26.08.2015
(73) Patentinhaber: ROBERT BOSCH GMBH, 70442 Stuttgart (DE)
(72) Erfinder: Boeck, Cornelius, 73230 Kirchheim (DE); Barth, Daniel, 70771 Leinfelden-Echterdingen (DE); Schadow, Joachim, 70563 Stuttgart (DE); Maute, Joerg, 71069 Sindelfingen (DE); Stock, Joern, 72658 Bempflingen (DE); Esenwein, Florian, 70771 Leinfelden-Echterdingen (DE); Lutz, Manfred, 70794 Filderstadt (DE)

(56) Entgegenhaltungen:
- WO-A1-2012/134469
- DE-A1- 4 204 420
- GB-A- 2 426 378
- JP-A- S6 099 508
- US-A- 4 410 846
- US-A1- 2006 220 612

## Beschreibung

### Stand der Technik

Aus DE 43 18 980 A1 ist bereits eine Handwerkzeugmaschine bekannt, die eine Gehäuseeinheit umfasst, welche ein Gehäuseelement, ein weiteres Gehäuseelement und ein Gehäuseverbindungselement, das das Gehäuseelement und das weitere Gehäuseelement miteinander verbindet, aufweist. Zudem umfasst die Handwerkzeugmaschine der DE 43 18 980 A1 eine elektrische und/oder elektronische Anzeigeeinheit, welche ein umfänglich angeordnetes Anzeigeelement zu einer Anzeige einer Handwerkzeugmaschinenkenngröße aufweist. Andere Beispiele sind aus der WO2012134469A1, US2006/220612A1 oder JP360099508A bekannt.

### Offenbarung der Erfindung

Die Erfindung, wie im Anspruch 1 beschrieben, geht aus von einer Handwerkzeugmaschine mit zumindest einer Gehäuseeinheit, die zumindest ein Gehäuseelement, zumindest ein weiteres Gehäuseelement und zumindest ein Gehäuseverbindungselement, das das Gehäuseelement und das weitere Gehäuseelement miteinander verbindet, aufweist, und mit zumindest einer elektrischen und/oder elektronischen Anzeigeeinheit, die zumindest ein zumindest teilweise umfänglich angeordnetes Anzeigeelement zu einer Anzeige zumindest einer Handwerkzeugmaschinenkenngröße aufweist.
Es wird vorgeschlagen, dass zumindest das Anzeigeelement zumindest teilweise einteilig mit dem Gehäuseverbindungselement ausgebildet ist. Hierbei ist das Gehäuseelement vorzugsweise direkt über das Anzeigeelement mit dem weiteren Gehäuseelement verbunden. Vorzugsweise ist das Anzeigeelement in einem montierten Zustand sichtbar zwischen dem Gehäuseelement und dem weiteren Gehäuseelement angeordnet. Das Gehäuseverbindungselement kann hierbei als Rastfortsatz, als Zwischengehäuseelement, als Klemmverbindungselement, als Gehäusesteg oder als ein anderes, einem Fachmann als sinnvoll erscheinendes Gehäuseverbindungselement ausgebildet sein, das dazu vorgesehen ist, das Gehäuseelement und das weitere Gehäuseelement miteinander zu verbinden. Unter einer "Handwerkzeugmaschine" soll hier insbesondere eine Werkzeugmaschine zu einer Bearbeitung von Werkstücken verstanden werden, die von einem Bediener transportmaschinenlos transportiert werden kann und die insbesondere während einer Bearbeitung eines Werkstücks von einem Bediener mit zumindest einer Hand haltbar ist. Die Handwerkzeugmaschine weist insbesondere eine Masse auf, die kleiner ist als 40 kg, bevorzugt kleiner ist als 10 kg und besonders bevorzugt kleiner ist als 5 kg. In einer bevorzugten Ausgestaltung ist die Handwerkzeugmaschine als Winkelschleifer ausgebildet. Es ist jedoch auch denkbar, dass die Handwerkzeugmaschine eine andere, einem Fachmann als sinnvoll erscheinende Ausgestaltung aufweist, wie beispielsweise eine Ausgestaltung als Bohrmaschine, als Stichsäge, als Säbelsäge, als Bohr- und/oder Meißelhammer, als Akkuschrauber, als Hobelmaschine, als Schleifmaschine o. dgl.

Die Gehäuseeinheit der Handwerkzeugmaschine weist vorzugsweise ein Getriebegehäuse und ein Motorgehäuse auf. Das Gehäuseelement bildet bevorzugt das Motorgehäuse. Das weitere Gehäuseelement bildet vorzugsweise das Getriebegehäuse. Das Getriebegehäuse ist bevorzugt zumindest teilweise aus einem metallischen Werkstoff gebildet. Das Motorgehäuse ist vorzugsweise zumindest teilweise aus einem Kunststoff gebildet. In einer alternativen Ausgestaltung der Handwerkzeugmaschine ist es jedoch auch denkbar, dass die Gehäuseeinheit ein Kombinationsgehäuse aufweist, das dazu vorgesehen ist, eine Antriebseinheit und/oder eine Abtriebseinheit der Handwerkzeugmaschine aufzunehmen und/oder zu lagern. Unter "vorgesehen" soll insbesondere speziell ausgelegt und/oder speziell ausgestattet verstanden werden. Darunter, dass ein Element und/oder eine Einheit zu einer bestimmten Funktion vorgesehen sind/ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Die Gehäuseeinheit kann eine Schalenbauweise, eine Topfbauweise oder eine Kombination aus einer Schalenbauweise und einer Topfbauweise aufweisen. Das Getriebegehäuse ist vorzugsweise mittels des zumindest teilweise einteilig mit dem Gehäuseverbindungselement ausgebildeten Anzeigeelements mit dem Motorgehäuse verbunden. Hierbei ist das Getriebegehäuse bevorzugt über das zumindest teilweise einteilig mit dem Gehäuseverbindungselement ausgebildete Anzeigeelement am Motorgehäuse fixiert. Somit sind das Gehäuseelement und das weitere Gehäuseelement mittels des zumindest teilweise einteilig mit dem Gehäuseverbindungselement ausgebildeten Anzeigeelements lösbar aneinander fixiert. Das zumindest teilweise einteilig mit dem Gehäuseverbindungselement ausgebildete Anzeigeelement ist hierbei bevorzugt, betrachtet entlang einer Haupterstreckungsrichtung der Handwerkzeugmaschine, zwischen dem Gehäuseelement, insbesondere dem Motorgehäuse, und dem weiteren Gehäuseelement angeordnet. Zu einer Fixierung des Gehäuseelements am weiteren Gehäuseelement ist das zumindest teilweise einteilig mit dem Gehäuseverbindungselement ausgebildete Anzeigeelement bevorzugt mit einer Seite am Gehäuseelement fixiert und mit einer weiteren Seite am weiteren Gehäuseelement fixiert. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Vorzugsweise ist das Anzeigeelement in einem Bereich zwischen zumindest einem Bedienelement einer Bedieneinheit der Handwerkzeugmaschine und einer Werkzeugaufnahme der Handwerkzeugmaschine an der Gehäuseeinheit angeordnet. Unter einer "Bedieneinheit" soll hier insbesondere eine Einheit verstanden werden, die zumindest ein Bauteil aufweist, das direkt von einem Bediener betätigbar ist und die dazu vorgesehen ist, durch eine Betätigung und/oder durch eine Eingabe von Parametern einen Prozess und/oder einen Zustand einer mit der Bedieneinheit gekoppelten Einheit zu beeinflussen und/oder zu ändern. Bevorzugt ist die Bedieneinheit zumindest zu einer Bestromung und/oder zu einer Unterbrechung einer Energieversorgung der Antriebseinheit der Handwerkzeugmaschine vorgesehen. Das Bedienelement ist vorzugsweise als Schalterbetätigungselement ausgebildet, das einen elektrischen Schalter zu einer Bestromung und/oder zu einer Unterbrechung einer Energieversorgung der Antriebseinheit der Handwerkzeugmaschine betätigt. Hierbei kann das Bedienelement schwenkbar, drehbar und/oder translatorisch bewegbar gelagert sein. Zudem sind vorzugsweise mittels der Bedieneinheit Handwerkzeugmaschinenkenngrößen einstellbar und/oder veränderbar. Es ist hierbei denkbar, dass eine Drehzahl der Antriebseinheit, ein Drehmoment der Antriebseinheit, ein Anlaufmoment usw. mittels der Bedieneinheit einstellbar und/oder veränderbar sind.

Unter dem Begriff "Werkzeugaufnahme" soll insbesondere ein Element oder eine Einheit der Handwerkzeugmaschine verstanden werden, an dem/der ein Bearbeitungswerkzeug zu einem Antrieb mittels zumindest einer Antriebseinheit der Handwerkzeugmaschine lösbar befestigbar ist. Bevorzugt ist die Werkzeugaufnahme dazu vorgesehen, das Bearbeitungswerkzeug drehfest aufzunehmen. Somit umfasst die Werkzeugaufnahme bevorzugt zumindest ein Drehmitnahmeelement. Das Drehmitnahmeelement ist vorzugsweise zu einer Drehmomentübertragung auf das Bearbeitungswerkzeug vorgesehen. Hierbei ist das Drehmitnahmeelement vorzugsweise formschlüssig und/oder kraftschlüssig mit dem Bearbeitungswerkzeug verbindbar. Das Drehmitnahmeelement ist bevorzugt drehfest mit einer Abtriebsspindel der Handwerkzeugmaschine verbunden. Es ist jedoch auch denkbar, dass die Werkzeugaufnahme zu einer translatorischen Kraftübertragung, insbesondere zu einer translatorischen Antriebskraftübertragung, fest mit dem Bearbeitungswerkzeug verbindbar ist.

Unter einer "elektrischen und/oder elektronischen Anzeigeeinheit" soll insbesondere eine Einheit verstanden werden, mittels derer ein optisch veränderbares Signal ausgebbar ist und/oder die in zumindest einem Anzeigezustand zumindest ein für einen Menschen sichtbares Signal ausgibt. Das Anzeigeelement selbst kann hierbei als Leuchtelementabdeckung, wie beispielsweise als Lichtleiter, als Reflektor, als Leuchtelement, wie beispielsweise als einzelne LED, als Platine mit mehreren LEDs, und/oder als hinterleuchtete Displayeinheit, insbesondere als Matrixdisplayeinheit, wie beispielsweise als LCD-Display, als OLED-Display und/oder als elektronisches Papier (E-paper, E-Ink), ausgebildet sein. Die Handwerkzeugmaschine kann zudem zusätzlich zur Anzeigeeinheit zumindest eine akustische und/oder haptische Ausgabeeinheit zu einer Informationsausgabe an einen Bediener umfassen. In einer bevorzugten Ausgestaltung der Handwerkzeugmaschine umfasst die Anzeigeeinheit zumindest eine Projektionseinheit, die dazu vorgesehen ist, zumindest eine Handwerkzeugmaschinenkenngröße auf ein an der Werkzeugaufnahme angeordnetes Bearbeitungswerkzeug zu projizieren. Es kann vorteilhaft eine Informationsausgabe an einen Bediener in einem direkten Arbeitsbereich der Handwerkzeugmaschine erreicht werden. Mittels der Projektionseinheit kann zudem vorteilhaft ein Bearbeitungswerkzeugverschleiß dargestellt werden, indem beispielsweise eine farbliche Markierung auf das Bearbeitungswerkzeug projizierbar ist, die sich während einer Bearbeitung eines Werkstücks verändert, insbesondere durch eine Abnahme eines Durchmessers eines scheibenförmig ausgebildeten Bearbeitungswerkzeugs.

Unter dem Ausdruck "zumindest teilweise umfänglich angeordnet" soll hier insbesondere eine Anordnung zumindest eines Elements und/oder einer Einheit relativ zu einem weiteren Element und/oder einer weiteren Einheit verstanden werden, wobei eine maximale Erstreckung des Elements und/oder der Einheit entlang einer Umfangsrichtung zumindest 5 % einer maximalen Umfangserstreckung des weiteren Elements und/oder der weiteren Einheit entspricht. Somit weist das Anzeigeelement, betrachtet entlang der Umfangsrichtung, vorzugsweise eine maximale Erstreckung auf, die insbesondere größer ist als 5 % einer maximalen Umfangserstreckung der Gehäuseeinheit, bevorzugt größer ist als 8 % der maximalen Umfangserstreckung der Gehäuseeinheit und besonders bevorzugt größer ist als 15 % der maximalen Umfangserstreckung der Gehäuseeinheit. Die Umfangserstreckung verläuft bevorzugt in einer Ebene, die sich zumindest im Wesentlichen senkrecht zu einer Haupterstreckungsrichtung der Handwerkzeugmaschine und/oder zumindest im Wesentlichen senkrecht zu einer Rotationsachse der Antriebseinheit der Handwerkzeugmaschine erstreckt. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Besonders bevorzugt verläuft die Haupterstreckungsrichtung der Handwerkzeugmaschine zumindest im Wesentlichen parallel zur Rotationsachse der Antriebseinheit der Handwerkzeugmaschine und/oder zu einer Bewegungsachse einer Abtriebseinheit der Handwerkzeugmaschine. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Mittels der erfindungsgemäßen Ausgestaltung der Handwerkzeugmaschine können vorteilhaft Montageaufwand, Montagekosten und Bauraum eingespart werden. Es kann ferner eine kompakte Anordnung des Anzeigeelements an der Gehäuseeinheit erreicht werden. Hierbei kann vorteilhaft eine Anordnung der Anzeigeeinheit, insbesondere des Anzeigeelements, in einem Bereich der Gehäuseeinheit ermöglicht werden, der für einen Bediener bei einer Bearbeitung eines Werkstücks mittels der Handwerkzeugmaschine gut einsehbar ist. Des Weiteren kann vorteilhaft ein Zusatznutzen des Gehäuseverbindungelements erreicht werden, indem eine Anzeigemöglichkeit von Handwerkzeugmaschinenkenngrößen mittels des zumindest teilweise einteilig mit dem Gehäuseverbindungselement ausgebildeten Anzeigeelements ermöglicht wird. Somit kann eine vorteilhafte Informationsausgabe an einen Bediener ermöglicht werden. Ein Bediener der Handwerkzeugmaschine kann somit mittels der Anzeigeeinheit vorteilhaft über verschiedenste Handwerkzeugmaschinenkenngrößen und/oder Handwerkzeugmaschinenzustände der Handwerkzeugmaschine informiert werden. Zudem kann das Anzeigeelement vorteilhaft als Bedienerführung eingesetzt werden, um eine selbsterklärende Bedienbarkeit der Handwerkzeugmaschine zu realisieren.

Des Weiteren wird vorgeschlagen, dass das Anzeigeelement zu einer Verbindung des Gehäuseelements und des weiteren Gehäuseelements formschlüssig und/oder kraftschlüssig am Gehäuseelement und/oder am weiteren Gehäuseelement fixierbar ist. Hierbei ist das Anzeigeelement mittels einer Klemmverbindung, mittels einer Rastverbindung, mittels einer Schraubverbindung oder einer anderen, einem Fachmann als sinnvoll erscheinenden Verbindung am Gehäuseelement und/oder am weiteren Gehäuseelement fixierbar. Bevorzugt ist das Anzeigeelement an zumindest einer Seite formschlüssig und/oder kraftschlüssig am Gehäuseelement fixierbar und mit zumindest einer weiteren Seite formschlüssig und/oder kraftschlüssig am weiteren Gehäuseelement fixierbar. Mittels der erfindungsgemäßen Ausgestaltung kann konstruktiv einfach eine Verbindung des Gehäuseelements und des weiteren Gehäuseelements, insbesondere eine Fixierung des Gehäuseelements am weiteren Gehäuseelement, erreicht werden.

Ferner wird vorgeschlagen, dass das Anzeigeelement zumindest einen Formschlussfortsatz aufweist, der zu einer Fixierung des Gehäuseelements und des weiteren Gehäuseelements mit einem korrespondierenden Formschlussfortsatz des Gehäuseelements und/oder des weiteren Gehäuseelements zusammenwirkt. Vorzugsweise hintergreift der Formschlussfortsatz des Anzeigeelements den korrespondierenden Formschlussfortsatz des Gehäuseelements und/oder des weiteren Gehäuseelements. Vorzugsweise weist das Anzeigeelement zu einer Fixierung des Gehäuseelements an dem weiteren Gehäuseelement zumindest zwei Formschlussfortsätze auf. Hierbei ist vorzugsweise einer der zwei Formschlussfortsätze an einer Seite des Anzeigeelements angeordnet und einer der zwei Formschlussfortsätze ist an einer der Seite abgewandten weiteren Seite des Anzeigeelements angeordnet. Mittels der erfindungsgemäßen Ausgestaltung kann vorteilhaft eine sichere Fixierung des Anzeigeelements am Gehäuseelement und/oder am weiteren Gehäuseelement erreicht werden. Zudem ist mittels des Anzeigeelements vorteilhaft eine sichere Fixierung des Gehäuseelements am weiteren Gehäuseelement realisierbar.

Zudem wird vorgeschlagen, dass das Anzeigeelement zu einer Verbindung des Gehäuseelements und des weiteren Gehäuseelements stoffschlüssig am Gehäuseelement und/oder am weiteren Gehäuseelement fixiert ist. Hierbei kann das Anzeigeelement mittels eines Spritzgussverfahrens, insbesondere eines Zweikomponenten-Spritzgussverfahrens, mittels eines Klebeverfahrens, mittels eines Schweißverfahrens, mittels eines Prägeverfahrens, insbesondere eines Heißprägeverfahrens, o. dgl., stoffschlüssig am Gehäuseelement und/oder am weiteren Gehäuseelement fixiert sein. Somit ist das Anzeigeelement vorzugsweise zumindest teilweise einteilig mit dem Gehäuseelement und/oder dem weiteren Gehäuseelement ausgebildet. Mittels der erfindungsgemäßen Ausgestaltung kann vorteilhaft eine stabile Anordnung des Anzeigeelements am Gehäuseelement und/oder am weiteren Gehäuseelement erreicht werden. Zudem können vorteilhaft separate Fixierungselemente zu einer Fixierung des Anzeigeelements am Gehäuseelement und/oder am weiteren Gehäuseelement eingespart werden.

Des Weiteren wird vorgeschlagen, dass sich das Anzeigeelement, betrachtet entlang einer zumindest im Wesentlichen quer zu einer Verbindungsrichtung der Gehäuseeinheit verlaufenden Richtung, durch das Gehäuseelement und/oder durch das weitere Gehäuseelement hindurch erstreckt. Vorzugsweise verläuft eine Verbindungsrichtung zumindest im Wesentlichen parallel zur Haupterstreckungsrichtung der Handwerkzeugmaschine. Somit verläuft die Verbindungsrichtung zumindest im Wesentlichen parallel zur Rotationsachse der Antriebseinheit. Das Gehäuseelement und das weitere Gehäuseelement sind bevorzugt entlang der Verbindungsrichtung miteinander verbindbar. Zudem wirken Fixierungskräfte zu einer Fixierung des Gehäuseelements und des weiteren Gehäuseelements mittels des Anzeigeelements zumindest im Wesentlichen entlang der Verbindungsrichtung. Somit kann vorteilhaft eine Elektronik und/oder eine Leuchteinheit der Anzeigeeinheit zu einer Ansteuerung und/oder zu einer Beleuchtung des Anzeigeelements innerhalb eines vom Gehäuseelement und/oder vom weiteren Gehäuseelement umgebenen Innenraums der Handwerkzeugmaschine angeordnet sein, während eine Erkennbarkeit und/oder eine Ablesbarkeit des Anzeigeelements von einer Außenseite der Handwerkzeugmaschine vorteilhaft gewährleistet ist. Somit kann beispielsweise vorteilhaft ein sinnvoller Schutz der Elektronik und/oder einer Leuchteinheit der Anzeigeeinheit konstruktiv einfach realisiert werden.

Ferner wird vorgeschlagen, dass das Anzeigeelement als elektrisches und/oder elektronisches Grafikanzeigeelement ausgebildet ist. Unter einem "Grafikanzeigeelement" soll hier insbesondere ein Element verstanden werden, mittels dessen Buchstaben, Grafiken, Symbole, Piktogramme, Bilder, Filme usw. optisch darstellbar sind. Hierbei kann das Grafikanzeigeelement als Zeilendisplay, als Mehrzeilendisplay, als LCD, als AMOLED, als LED-Display, als Farbdisplay, als zumindest fünf miteinander verbundene LED-Leuchtstreifen oder als weiteres, einem Fachmann als sinnvoll erscheinendes Grafikanzeigeelement ausgebildet sein. Besonders bevorzugt ist das Grafikanzeigeelement als berührungsempfindliches Display ausgebildet. Es ist jedoch auch denkbar, dass das berührungsempfindliche Grafikanzeigeelement eine andere, einem Fachmann als sinnvoll erscheinende Ausgestaltung aufweist. Mittels der erfindungsgemäßen Ausgestaltung kann einem Bediener besonders vorteilhaft eine Handwerkzeugmaschinenkenngröße angezeigt werden. Somit kann vorteilhaft eine klare, verständnisvolle und eindeutig zuordenbare Informationsausgabe an einen Bediener realisiert werden. Zudem können somit auch komplexe Informationen ausgegeben werden. Ferner kann bei einer Ausgestaltung des Grafikanzeigeelements als berührungsempfindliches Grafikanzeigeelement vorteilhaft eine direkte Reaktion eines Bedieners auf eine mittels des Grafikanzeigeelements angezeigte Information durch eine Betätigung des berührungsempfindlichen Grafikanzeigeelements erfolgen. Somit kann vorteilhaft eine komfortable Bedienung der Handwerkzeugmaschine erreicht werden. Mittels der erfindungsgemäßen Ausgestaltung kann konstruktiv einfach ein Grafikanzeigeelement zu einer Anzeige von Buchstaben, Grafiken, Symbolen, Piktogrammen, Bildern, Filmen usw. realisiert werden.

Zudem wird vorgeschlagen, dass das elektrische und/oder elektronische Grafikanzeigeelement zumindest fünfzeilig ausgebildet ist. Somit sind vorteilhaft zumindest Zahlen und Buchstaben mittels des elektrischen und/oder elektronischen Grafikanzeigeelements anzeigbar, die zu einer Bedienerführung eines Bedieners verwendbar sind.

Des Weiteren wird vorgeschlagen, dass das Anzeigeelement abtriebsnah an der Gehäuseeinheit angeordnet ist. Unter dem Ausdruck "abtriebsnah angeordnet" soll hier insbesondere eine Anordnung zumindest eines Elements und/oder einer Einheit relativ zu einer Abtriebseinheit der Handwerkzeugmaschine, insbesondere zu einer Abtriebsbewegungsachse der Abtriebseinheit, verstanden werden, wobei ein minimaler Abstand zwischen dem Element und/oder der Einheit und der Abtriebseinheit, insbesondere zur Abtriebsbewegungsachse, insbesondere kleiner ist als 100 mm, bevorzugt kleiner ist als 50 mm und besonders bevorzugt kleiner ist als 30 mm. Somit weist das Anzeigeelement vorzugsweise einen minimalen Abstand zur Abtriebseinheit, insbesondere zur Abtriebsbewegungsachse, auf, der insbesondere kleiner ist als 100 mm, bevorzugt kleiner ist als 50 mm und besonders bevorzugt kleiner ist als 30 mm. Besonders bevorzugt ist das Anzeigeelement hierbei am Getriebegehäuse der Gehäuseeinheit angeordnet, insbesondere an einer dem Motorgehäuse zugewandten Seite des Getriebegehäuses. Mittels der erfindungsgemäßen Ausgestaltung kann vorteilhaft eine Anordnung der Anzeigeeinheit, insbesondere des Anzeigeelements, in einem Bereich der Gehäuseeinheit ermöglicht werden, der für einen Bediener bei einer Bearbeitung eines Werkstücks mittels der Handwerkzeugmaschine gut einsehbar ist. Somit kann vorteilhaft ein Bediener komfortabel über verschiedenste Zustände der Handwerkzeugmaschine während einer Bearbeitung eines Werkstücks informiert werden.

Ferner wird vorgeschlagen, dass sich das Anzeigeelement zumindest zu 25 % einer maximalen Gesamtumfangserstreckung der Gehäuseeinheit um die Gehäuseeinheit erstreckt. Somit weist das Anzeigeelement vorzugsweise eine maximale Erstreckung entlang der Umfangsrichtung auf, die zumindest 25 % der maximalen Gesamtumfangserstreckung der Gehäuseeinheit entspricht. Insbesondere erstreckt sich das Anzeigeelement zumindest zu 30 % der maximalen Gesamtumfangserstreckung der Gehäuseeinheit, bevorzugt zumindest zu 50 % der maximalen Gesamtumfangserstreckung der Gehäuseeinheit und besonders bevorzugt zumindest zu 70 % der maximalen Gesamtumfangserstreckung der Gehäuseeinheit um die Gehäuseeinheit. In einer besonders bevorzugten Ausgestaltung der Handwerkzeugmaschine erstreckt sich das Anzeigeelement vollständig um die Gehäuseeinheit. Mittels der erfindungsgemäßen Ausgestaltung kann vorteilhaft eine Einsehbarkeit des Anzeigeelements aus verschiedenen Blickwinkeln ermöglicht werden.

Zudem wird vorgeschlagen, dass das Anzeigeelement zumindest im Wesentlichen bündig mit einer Außenfläche der Gehäuseeinheit abschließt. Unter "zumindest im Wesentlichen bündig abschließen" soll hier insbesondere eine Anordnung des Anzeigeelements an der Gehäuseeinheit verstanden werden, wobei sich das Anzeigeelement insbesondere um weniger als 10 mm, bevorzugt um weniger als 5 mm und besonders bevorzugt um weniger als 2 mm über die Außenfläche hinweg erstreckt, insbesondere betrachtet entlang einer ausgehend von einer Innenfläche der Gehäuseeinheit in Richtung der Außenfläche der Gehäuseeinheit verlaufenden Richtung. Besonders bevorzugt ist das Anzeigeelement in einer Aufnahmeausnehmung der Gehäuseeinheit angeordnet und erstreckt sich maximal bis zur Außenfläche der Gehäuseeinheit, insbesondere betrachtet entlang einer ausgehend von einer Innenfläche der Gehäuseeinheit in Richtung der Außenfläche der Gehäuseeinheit verlaufenden Richtung. Somit kann vorteilhaft eine kompakte Anordnung des Anzeigeelements erreicht werden. Zudem kann das Anzeigeelement vorteilhaft vor Beschädigungen geschützt werden.

Die erfindungsgemäße Handwerkzeugmaschine soll hierbei nicht auf die oben beschriebene Anwendung und Ausführungsform beschränkt sein. Insbesondere kann die erfindungsgemäße Handwerkzeugmaschine zu einer Erfüllung einer hierin beschriebenen Funktionsweise eine von einer hierin genannten Anzahl von einzelnen Elementen, Bauteilen, Einheiten und/oder Verfahrensschritten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Handwerkzeugmaschine, die als Winkelschleifer ausgebildet ist, in einer schematischen Darstellung,
- Fig. 2: eine Detailansicht einer Anzeigeeinheit der erfindungsgemäßen Hand-werkzeugmaschine in einer schematischen Darstellung,
- Fig. 3: eine Detailansicht einer alternativen Anzeigeeinheit, die ein mittels eines Stoffschlusses und mittels eines Formschlusses und/oder Kraftschlusses befestigtes Anzeigeelement umfasst, in einer schematischen Darstellung,
- Fig. 4: eine Detailansicht einer weiteren alternativen Anzeigeeinheit, die ein mittels zumindest einer Rastverbindung befestigtes Anzeigeelement umfasst, in einer schematischen Darstellung,
- Fig. 5: eine Detailansicht einer weiteren alternativen Anzeigeeinheit, die ein als Grafikanzeigeelement ausgebildetes Anzeigeelement umfasst, in einer schematischen Darstellung,
- Fig. 6: eine Detailansicht einer weiteren alternativen Anzeigeeinheit in einer schematischen Darstellung und
- Fig. 7: eine Detailansicht einer weiteren alternativen Anzeigeeinheit in einer schematischen Darstellung.

### Beschreibung der Ausführungsbeispiele

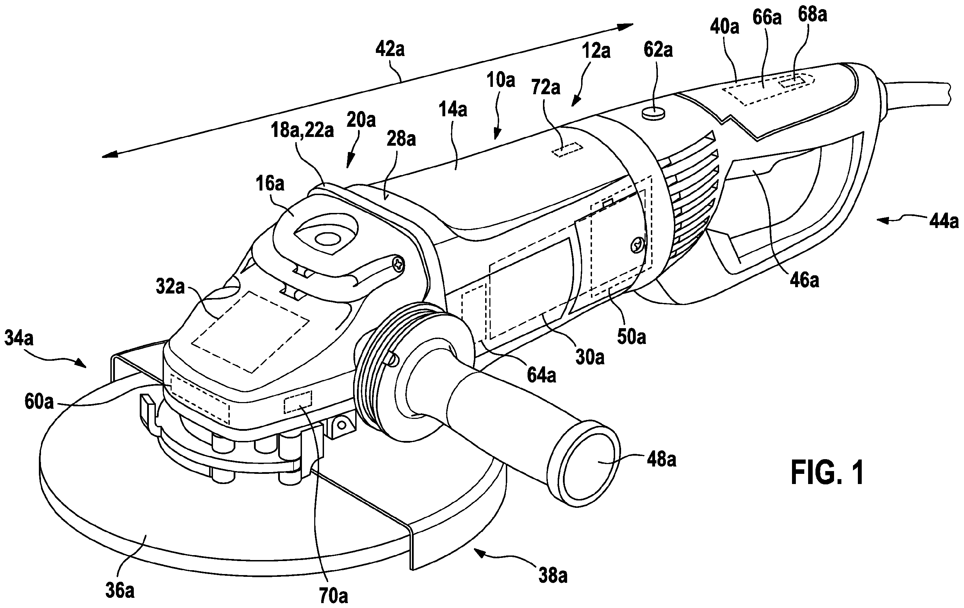

Figur 1 zeigt eine Handwerkzeugmaschine 10a, die als Winkelschleifer ausgebildet ist. Die Handwerkzeugmaschine 10a umfasst hierbei zumindest eine Gehäuseeinheit 12a, die zumindest ein Gehäuseelement 14a, zumindest ein weiteres Gehäuseelement 16a und zumindest ein Gehäuseverbindungselement 18a, das das Gehäuseelement 14a und das weitere Gehäuseelement 16a miteinander verbindet, aufweist, und zumindest eine elektrische und/oder elektronische Anzeigeeinheit 20a, die zumindest ein zumindest teilweise umfänglich angeordnetes Anzeigeelement 22a zu einer Anzeige zumindest einer Handwerkzeugmaschinenkenngröße aufweist. Das Gehäuseelement 14a ist hierbei als Motorgehäuse der Handwerkzeugmaschine 10a ausgebildet. Somit ist das Gehäuseelement 14a zu einer Aufnahme einer Antriebseinheit 30a der Handwerkzeugmaschine 10a vorgesehen. Die Antriebseinheit 30a ist als bürstenlose Elektromotoreinheit ausgebildet. Hierbei ist die Antriebseinheit 30a als EC-Elektromotoreinheit ausgebildet. Es ist jedoch auch denkbar, dass die Antriebseinheit 30a eine andere, einem Fachmann als sinnvoll erscheinende Ausgestaltung aufweist. Das weitere Gehäuseelement 16a ist als Getriebegehäuse der Handwerkzeugmaschine 10a ausgebildet. Somit ist das weitere Gehäuseelement 16a zu einer Aufnahme einer Abtriebseinheit 32a der Handwerkzeugmaschine 10a vorgesehen. Die Antriebseinheit 30a ist dazu vorgesehen, ein an einer Werkzeugaufnahme 34a der Handwerkzeugmaschine 10a anordenbares Bearbeitungswerkzeug 36a über die Abtriebseinheit 32a rotierend anzutreiben. Das Bearbeitungswerkzeug 36a ist hierbei als Schleifscheibe ausgebildet. Es ist jedoch auch denkbar, dass das Bearbeitungswerkzeug 36a als Trenn- oder Polierscheibe ausgebildet ist. Ferner umfasst die Handwerkzeugmaschine 10a zumindest eine Schutzhaubeneinheit 38a. Die Schutzhaubeneinheit 38a umgibt das Bearbeitungswerkzeug 36a in einem an der Werkzeugaufnahme 34a angeordneten Zustand des Bearbeitungswerkzeugs 36a zumindest entlang eines Winkelbereichs von mehr als 120°. Ferner umfasst die Handwerkzeugmaschine 10a zumindest einen Haupthandgriff 40a, der sich an einer der Werkzeugaufnahme 34a abgewandten Seite des Gehäuseelements 14a in Richtung einer Haupterstreckungsrichtung 42a der Handwerkzeugmaschine 10a erstreckt. Zudem umfasst die Handwerkzeugmaschine 10a zumindest eine Bedieneinheit 44a, die zumindest ein Bedienelement 46a aufweist. Das Bedienelement 46a ist am Haupthandgriff 40a angeordnet. Hierbei ist das Bedienelement 46a zumindest zu einer Bestromung der Antriebseinheit 30a vorgesehen. An dem weiteren Gehäuseelement 16a ist zudem ein Zusatzhandgriff 48a lösbar anordenbar. In einem am weiteren Gehäuseelement 16a angeordneten Zustand des Zusatzhandgriffs 48a erstreckt sich der Zusatzhandgriff 48a zumindest im Wesentlichen quer zur Haupterstreckungsrichtung 42a der Handwerkzeugmaschine 10a. Die Haupterstreckungsrichtung 42a verläuft zumindest im Wesentlichen parallel zu einer Rotationsachse der Antriebseinheit 30a.

Des Weiteren umfasst die Handwerkzeugmaschine 10a zumindest eine Steuer- und/oder Regeleinheit 50a, die zumindest dazu vorgesehen ist, die Antriebseinheit 30a zu steuern und/oder zu regeln. Zudem ist die Steuer- und/oder Regeleinheit 50a dazu vorgesehen, die Anzeigeeinheit 20a zu steuern und/oder zu regeln. Hierbei ist die Anzeigeeinheit 20a mittels der Steuer- und/oder Regeleinheit 50a in Abhängigkeit eines Zustands und/oder in Abhängigkeit eines eingestellten Betriebsmodus der Handwerkzeugmaschine 10a steuerbar und/oder regelbar. Somit ist einem Bediener mittels der Anzeigeeinheit 20a zumindest eine Information über den Zustand, wie beispielsweise ein optimaler Arbeitsbereich, eine Überlast, eine Servicenotwendigkeit usw., und/oder des eingestellten Betriebsmodus, wie beispielsweise ein Energiesparmodus, ein Stand-by-Modus, Kenngrößen eines Betriebsmodus (Drehzahl, Drehmoment usw.) usw., anzeigbar. Hierbei ist die Information mittels eines Anzeigens von verschiedenen Farben und/oder durch verschiedene Anzeigemodi, wie beispielsweise ein langsames Blinken, ein schnelles Blinken, ein konstantes Leuchten usw., der Anzeigeeinheit 20a anzeigbar. Zu einer Anzeige einer Information umfasst die Anzeigeeinheit 20a zumindest das Anzeigeelement 22a. Das Anzeigeelement 22a ist, betrachtet entlang der Haupterstreckungsrichtung 42a, in einem Bereich zwischen dem Bedienelement 46a und der Werkzeugaufnahme 34a an der Gehäuseeinheit 12a angeordnet. Hierbei ist das Anzeigeelement 22a abtriebsnah an der Gehäuseeinheit 12a angeordnet. Somit weist das Anzeigeelement 22a, betrachtet entlang der Haupterstreckungsrichtung 42a, einen minimalen Abstand zu einer Abtriebsbewegungsachse eines als Abtriebsspindel ausgebildeten Abtriebselements (hier nicht näher dargestellt) der Abtriebseinheit 32a auf, der kleiner ist als 100 mm. Das Anzeigeelement 22a ist, betrachtet entlang der Haupterstreckungsrichtung 42a, zwischen dem Gehäuseelement 14a und dem weiteren Gehäuseelement 16a angeordnet. Somit ist das Anzeigeelement 22a angrenzend am Gehäuseelement 14a und angrenzend am weiteren Gehäuseelement 16a angeordnet. Hierbei kann das Anzeigeelement 22a in einem Bereich eines Luftleitrings einer Lüftungseinheit (hier nicht näher dargestellt) der Handwerkzeugmaschine 10a angeordnet sein oder das Anzeigeelement 22a selbst bildet den Luftleitring.

Das Anzeigeelement 22a ist als Lichtleiter ausgebildet. Es ist jedoch auch denkbar, dass das Anzeigeelement 22a eine andere, einem Fachmann als sinnvoll erscheinende Ausgestaltung aufweist, wie beispielsweise eine Ausgestaltung als LED-Leuchtstreifen, der mehrere entlang einer Längserstreckung des Anzeigeelements 22a angeordnete LEDs aufweist. Das Anzeigeelement 22a schließt zumindest im Wesentlichen bündig mit einer Außenfläche 28a der Gehäuseeinheit 12a ab. Somit erstreckt sich das Anzeigeelement 22a, betrachtet entlang einer ausgehend von einer Innenfläche der Gehäuseeinheit 12a in Richtung der Außenfläche 28a der Gehäuseeinheit 12a verlaufenden Richtung, maximal 8 mm über die Außenfläche 28a der Gehäuseeinheit 12a hinweg oder maximal bis hin zur Außenfläche 28a der Gehäuseeinheit 12a. Zudem ist das Anzeigeelement 22a kreisringförmig ausgebildet. Somit erstreckt sich das Anzeigeelement 22a zumindest zu 25 % einer maximalen Gesamtumfangserstreckung der Gehäuseeinheit 12a um die Gehäuseeinheit 12a. Bevorzugt erstreckt sich das Anzeigeelement 22a zumindest im Wesentlichen vollständig um die Gehäuseeinheit 12a herum.

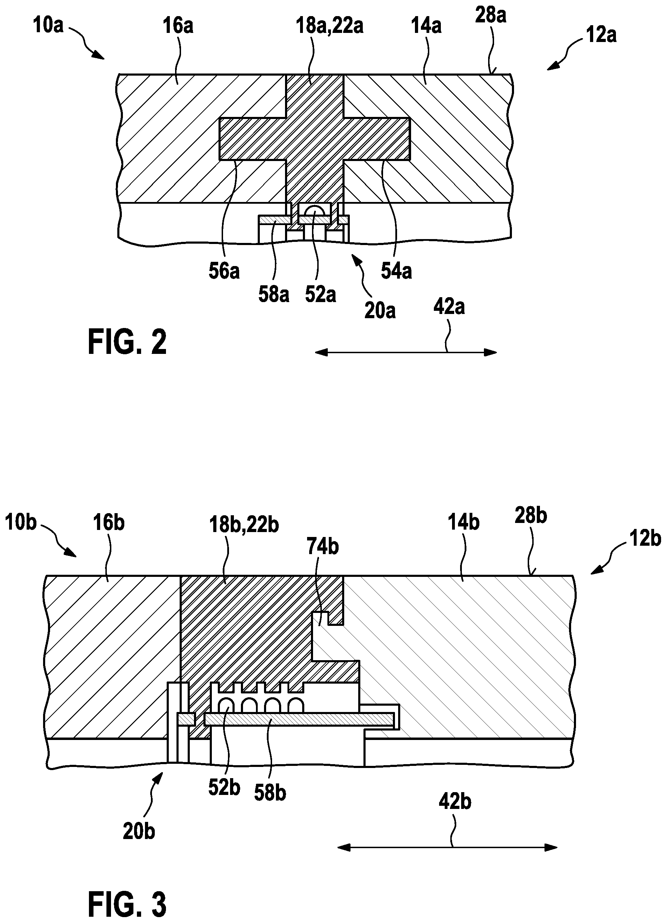

Zu einer Beleuchtung des Anzeigeelements 22a umfasst die Anzeigeeinheit 20a zumindest ein Leuchtelement 52a (Figur 2). Das Leuchtelement 52a ist hierbei als LED ausgebildet, insbesondere als RGB-LED. Insgesamt weist die Anzeigeeinheit 20a eine Vielzahl an Leuchtelementen 52a auf, die entlang einer Längserstreckung gleichmäßig verteilt angeordnet sind. Somit bilden die Leuchtelemente 52a einen Leuchtring. Es ist jedoch auch denkbar, dass die Leuchtelemente 52a ungleichmäßig verteilt entlang der Längserstreckung bzw. der Umfangsrichtung angeordnet sind. Die Leuchtelemente 52a sind einzeln mittels der Steuer- und/oder Regeleinheit 50a steuerbar und/oder regelbar. Hierzu sind die Leuchtelemente 52a gemeinsam auf einer Leiterplatte 58a der Anzeigeeinheit 20a angeordnet. Die Leiterplatte 58a ist als flexible Leiterplatte ausgebildet. Zudem ist die Leiterplatte 58a kreisringförmig in der Gehäuseeinheit 12a angeordnet. Hierdurch wird eine Beleuchtung des Anzeigeelements 22a entlang der gesamten Längserstreckung des Anzeigeelements 22a ermöglicht. Zudem ist eine partielle Beleuchtung oder eine umlaufende Beleuchtung des Anzeigeelements 22a somit realisierbar. Die Längserstreckung des Anzeigeelements 22a erstreckt sich zumindest im Wesentlichen quer zur Haupterstreckungsrichtung 42a der Handwerkzeugmaschine 10a. Somit erstreckt sich die Längserstreckung des Anzeigeelements 22a entlang einer Umfangsrichtung der Handwerkzeugmaschine 10a. Hierbei erstreckt sich die Längserstreckung des Anzeigeelements 22a in einer zumindest im Wesentlichen senkrecht zur Haupterstreckungsrichtung 42a verlaufenden Ebene.

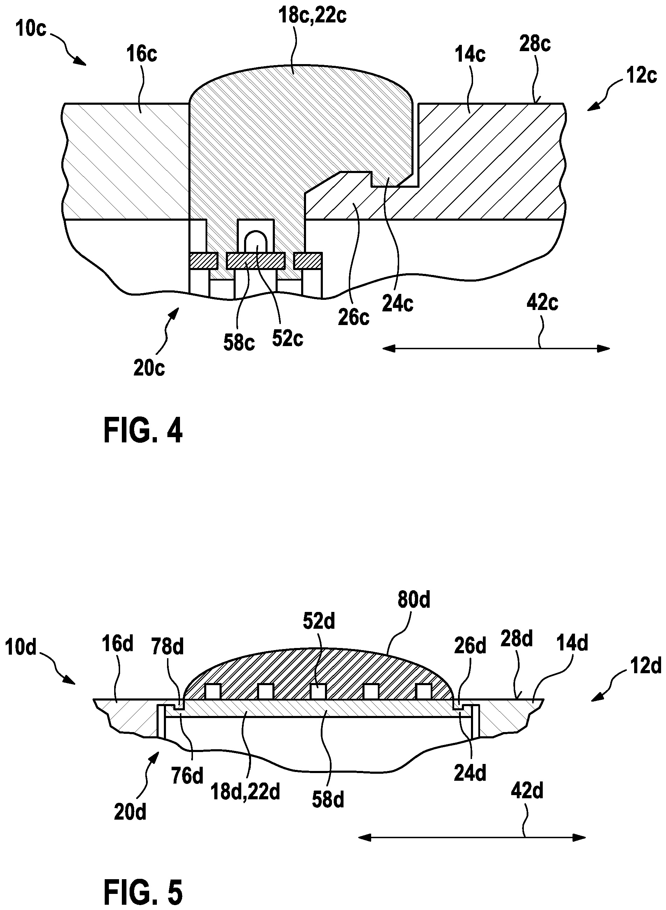

Das Anzeigeelement 22a ist zumindest teilweise einteilig mit dem Gehäuseverbindungselement 18a ausgebildet. Hierbei bildet das Anzeigeelement 22a das Gehäuseverbindungselement 18a. Das Anzeigeelement 22a ist zu einer Verbindung des Gehäuseelements 14a und des weiteren Gehäuseelements 16a formschlüssig und/oder kraftschlüssig am Gehäuseelement 14a und/oder am weiteren Gehäuseelement 16a fixierbar. Das Gehäuseelement 14a umfasst zu einer teilweisen Aufnahme des Anzeigeelements 22a zumindest eine Ausnehmung 54a, in der das Anzeigeelement 22a zumindest teilweise formschlüssig und/oder kraftschlüssig anordenbar ist. Hierzu umfasst das Anzeigeelement 22a zumindest einen Fixierungsfortsatz, der in einem montierten Zustand in die Ausnehmung 54a des Gehäuseelements 14a eingreift. Das weitere Gehäuseelement 16a umfasst zu einer teilweisen Aufnahme des Anzeigeelements 22a ebenfalls zumindest eine Ausnehmung 56a, in der das Anzeigeelement 22a zumindest teilweise formschlüssig und/oder kraftschlüssig anordenbar ist. Hierzu umfasst das Anzeigeelement 22a zumindest einen weiteren Fixierungsfortsatz, der in einem montierten Zustand in die Ausnehmung 56a des weiteren Gehäuseelements 16a eingreift. Das Anzeigeelement 22a ist hierbei mittels einer Presspassung am Gehäuseelement 14a und am weiteren Gehäuseelement 16a fixierbar. Es ist jedoch auch denkbar, dass das Anzeigeelement 22a mittels einer Klebeverbindung usw. am Gehäuseelement 14a und am weiteren Gehäuseelement 16a fixierbar ist. In einer alternativen Ausgestaltung ist es denkbar, dass das Anzeigeelement 22a alternativ zu den Fixierungsfortsätzen Formschlussfortsätze (vgl. hierzu beispielsweise Figur 4) aufweist, die zu einer formschlüssigen und/oder kraftschlüssigen Fixierung des Gehäuseelements 14a und des weiteren Gehäuseelements 16a entlang der Haupterstreckungsrichtung 42a mit jeweils einem korrespondierenden Formschlussfortsatz (vgl. hierzu beispielsweise Figur 4) des Gehäuseelements 14a und/oder des weiteren Gehäuseelements 16a zusammenwirken.

Des Weiteren erstreckt sich das Anzeigeelement 22a, betrachtet entlang einer zumindest im Wesentlichen quer zu einer Verbindungsrichtung der Gehäuseeinheit 12a verlaufenden Richtung, durch das Gehäuseelement 14a und/oder durch das weitere Gehäuseelement 16a hindurch. Somit weist das Anzeigeelement 22a, betrachtet entlang der zumindest im Wesentlichen quer zur Verbindungsrichtung der Gehäuseeinheit 12a verlaufenden Richtung, eine größere Erstreckung auf als eine Materialstärke des Gehäuseelements 14a und/oder des weiteren Gehäuseelements 16a. Die Leiterplatte 58a der Anzeigeeinheit 20a ist hierbei in einem von dem Gehäuseelement 14a und dem weiteren Gehäuseelement 16a umgebenen Innenraum der Gehäuseeinheit 12a angeordnet. Zudem ist die Leiterplatte 58a mittels einer kraftschlüssigen, mittels einer formschlüssigen und/oder mittels einer stoffschlüssigen Verbindung am Anzeigeelement 22a fixiert.

Die Anzeigeeinheit 20a ist mittels der Steuer- und/oder Regeleinheit 50a zu einer Anzeige einer Drehrichtung derart steuerbar und/oder regelbar, dass ein der Drehrichtung entsprechendes, umlaufendes Lichtsignal mittels der Anzeigeeinheit 20a erzeugbar ist. Hierzu sind die Leuchtelemente 52a mittels der Steuer- und/oder Regeleinheit 50a ansteuerbar, die das Anzeigeelement 22a beleuchten. Zu einer Anzeige einer Drehzahl ist die Anzeigeeinheit 20a in Abhängigkeit von einer Drehzahl der Antriebseinheit 30a hinsichtlich einer Farbe und hinsichtlich einer Umlaufgeschwindigkeit von der Steuer- und/oder Regeleinheit 50a steuerbar und/oder regelbar. Bei einer geringen Drehzahl ist mittels der Anzeigeeinheit 20a beispielsweise ein grünes und langsam umlaufendes Lichtsignal erzeugbar. Zudem ist es denkbar, dass eine Lichtintensität und/oder ein Leuchtbereich der Anzeigeeinheit 20a ebenfalls in Abhängigkeit von der Drehzahl veränderbar ist. Ferner ist beispielsweise eine Anzeige einer Überlast der Antriebseinheit 30a mittels eines Aufleuchtens der Anzeigeeinheit 20a in einer Farbe möglich und/oder mittels einer Veränderung einer Umlaufgeschwindigkeit und/oder einer Farbänderung. Ferner ist mittels der Anzeigeeinheit 20a beispielsweise ein optimaler Arbeitspunkt der Handwerkzeugmaschine 10a durch eine Anzeige eines Lichtsignals anzeigbar. Hierbei ist es denkbar, dass die Steuer- und/oder Regeleinheit 50a in Abhängigkeit eines Annäherns an einen optimalen Arbeitspunkt der Handwerkzeugmaschine 10a eine Lichtintensität, eine Umlaufgeschwindigkeit, eine Farbe und/oder einen Leuchtbereich der Anzeigeeinheit 20a ändert. Ein Stand-by-Modus der Handwerkzeugmaschine 10a ist beispielsweise mittels einer gleichmäßigen Veränderung einer Lichtintensität, wie beispielsweise durch ein Hell- und wieder Dunkelwerden, der Anzeigeeinheit 20a anzeigbar. Zudem ist es denkbar, dass zu einer Anzeige des Stand-by-Modus eine Umlaufgeschwindigkeit und weitere, einem Fachmann als sinnvoll erscheinende Kenngrößen der Anzeigeeinheit 20a veränderbar sind. Somit kann vorteilhaft einem Bediener optisch eine Information hinsichtlich eines Zustands und/oder eines Betriebsmodus der Handwerkzeugmaschine 10a ausgegeben werden.

Des Weiteren umfasst die Anzeigeeinheit 20a zumindest eine Projektionseinheit 60a, die dazu vorgesehen ist, zumindest eine Handwerkzeugmaschinenkenngröße auf das an der Werkzeugaufnahme 34a angeordnete Bearbeitungswerkzeug 36a zu projizieren. Hierbei ist es denkbar, dass eine Drehzahl, eine Leistung, ein Wirkungsgrad, ein Drehmoment und/oder andere Kenngrößen der Antriebseinheit 30a und/oder der Handwerkzeugmaschine 10a mittels der Projektionseinheit 60a auf das Bearbeitungswerkzeug 36a projizierbar sind. Zudem ist mittels der Projektionseinheit 60a eine Abnutzung des Bearbeitungswerkzeugs 36a anzeigbar. Hierzu ist beispielsweise ein von grün nach rot verlaufendes Farbschema mittels der Projektionseinheit 60a auf eine Oberfläche des Bearbeitungswerkzeugs 36a projizierbar. Ein Bediener kann somit vorteilhaft in Abhängigkeit einer noch auf der Oberfläche des Bearbeitungswerkzeugs 36a erkennbaren Farbe des Farbschemas erkennen, inwieweit das Bearbeitungswerkzeug 36a bereits abgenutzt ist, insbesondere inwieweit ein Durchmesser des Bearbeitungswerkzeugs 36a bereits abgenommen hat.

Des Weiteren umfasst die Bedieneinheit 44a zumindest ein Betriebsmoduseinstellelement 62a, mittels dessen ein Betriebsmodus manuell einstellbar ist. Mittels des Betriebsmoduseinstellelements 62a ist beispielsweise ein Energiesparmodus der Handwerkzeugmaschine 10a aktivierbar. Der Energiesparmodus ist beispielsweise mittels eines grünen Aufleuchtens der Anzeigeeinheit 20a, insbesondere des mittels der Leuchtelemente 52a beleuchtbaren Anzeigeelements 22a, an einen Bediener ausgebbar. Im Energiesparmodus ist somit einem Bediener mittels des Anzeigeelements 22a ein Betrieb der Handwerkzeugmaschine 10a anzeigbar. Zudem ist mittels der Projektionseinheit 60a ein optimaler Betriebsbereich im Energiesparmodus anzeigbar, wie beispielsweise eine optimale Drehzahl, ein optimaler Anpressdruck, ein optimales Drehmoment usw., in dem ein maximaler Arbeitsfortschritt bei geringem Energieverbrauch möglich ist. Zu einer Anzeige eines optimalen Anpressdrucks kann die Anzeigeeinheit 20a zusätzlich zum Anzeigeelement 22a und zu den Leuchtelementen 52a eine einzelne LED (hier nicht näher dargestellt) umfassen, die dazu vorgesehen ist, einem Bediener ein Erreichen und/oder ein Überschreiten eines optimalen Anpressdrucks anzuzeigen. Hierzu leuchtet die LED bei einem Erreichen eines optimalen Anpressdrucks beispielsweise grün, bei einem Überschreiten rot und bei einem Unterschreiten blau. Somit erhält ein Bediener vorteilhaft eine Rückmeldung hinsichtlich seines Arbeitsverhaltens. Die Projektionseinheit 60a ist hierbei manuell von einem Bediener aktivierbar. Es ist jedoch auch denkbar, dass die Projektionseinheit 60a in Abhängigkeit zumindest einer Handwerkzeugmaschinenkenngröße automatisch aktivierbar ist.

Die Handwerkzeugmaschine 10a umfasst zudem zumindest eine Antriebseinheitssensoreinheit 64a zu einer Erfassung zumindest einer Antriebseinheitskenngröße. Die Antriebseinheitskenngröße ist hierbei als Antriebseinheitsstrom, als Antriebseinheitsspannung, als Antriebseinheitsleistung o. dgl. ausgebildet. Die Antriebseinheitskenngröße ist mittels der Steuer- und/oder Regeleinheit 50a zu einer automatischen Aktivierung des Energiesparmodus auswertbar. Hierbei wird eine Antriebseinheitskenngröße, insbesondere eine Antriebseinheitsleistung oder ein Antriebseinheitsstrom, mittels der Antriebseinheitssensoreinheit 64a über einen vorgegebenen Zeitraum erfasst. Die Steuer- und/oder Regeleinheit 50a mittelt die erfassten Werte über den Zeitraum zu einer Berechnung eines Mittelwerts. In Abhängigkeit von dem errechneten Mittelwert aktiviert die Steuer- und/oder Regeleinheit 50a den Energiesparmodus. Die Steuer- und/oder Regeleinheit 50a wertet hierbei aus, ob ein Bediener eine hohe Leistung der Antriebseinheit 30a fordert oder ob die Handwerkzeugmaschine 10a in einem Wertebereich betrieben wird, der dem Energiesparmodus entspricht. Ist ein Betrieb in einem Wertbereich des Energiesparmodus erkannt, ist der Energiesparmodus durch die Steuer- und/oder Regeleinheit 50a automatisch aktivierbar. Es ist hierbei auch denkbar, dass die Antriebseinheitssensoreinheit 64a während eines gesamten Betriebs der Handwerkzeugmaschine 10a eine Antriebseinheitskenngröße erfasst und die Steuer- und/oder Regeleinheit 50a während des gesamten Betriebs die mittels der Antriebseinheitssensoreinheit 64a erfasste Antriebseinheitskenngröße verarbeitet. Die Steuer- und/oder Regeleinheit 50a aktiviert hierbei in Abhängigkeit der erfassten Antriebseinheitskenngröße einen Betriebsmodus der Handwerkzeugmaschine 10a. Erkennt die Steuer- und/oder Regeleinheit 50a beispielsweise einen Betrieb der Antriebseinheit 30a unter Forderung einer hohen Leistung über einen langen Zeitraum, so aktiviert die Steuer- und/oder Regeleinheit 50a automatisch einen entsprechenden Betriebsmodus, der abweicht vom Energiesparmodus.

Im Energiesparmodus ist die Leistung der Antriebseinheit 30a auf einen Grenzwert begrenzt. Hierdurch ist im Energiesparmodus vorteilhaft eine Kühlung der Antriebseinheit 30a allein durch Konvektion möglich, um beispielsweise vorteilhaft einen Energieverbrauch einer Lüftereinheit zu sparen. Hierdurch kann vorteilhaft ein Wirkungsgrad der Handwerkzeugmaschine 10a bei maximal möglicher Belastung gesteigert werden. Besonders vorteilhaft ist es, die Leistung auf einen Wert zwischen 75 % und 110 % einer Nennleistung der Antriebseinheit 30a zu begrenzen, insbesondere auf einen Wert zwischen 90% und 100 % der Nennleistung der Antriebseinheit 30a. Vorzugsweise bleibt eine Unterbrechung einer Bearbeitung eines Werkstücks und/oder ein Absetzen von einem Werkstück bei einer automatischen Aktivierung von Betriebsmodi der Handwerkzeugmaschine 10a unberücksichtigt. Es kann vorteilhaft ein unbeabsichtigtes Umschalten in einen leistungsschwachen Betriebsmodus verhindert werden. Bei einer automatischen Betriebsmodusaktivierung mittels der Steuer- und/oder Regeleinheit 50a ist es insbesondere bei einer Erfassung von Antriebseinheitskenngrößen über einen gesamten Betrieb sinnvoll, eine Antriebseinheitsleistung unbeschränkt zu belassen, um eine unvorteilhafte Ermittlung von Laststufen vorteilhaft zu vermeiden.

Alternativ oder zusätzlich zur Antriebseinheitssensoreinheit 64a umfasst die Handwerkzeugmaschine 10a zumindest eine Bedienersensoreinheit 66a zu einer Erfassung zumindest einer bedienerspezifischen Kenngröße. Die bedienerspezifische Kenngröße ist mittels der Steuer- und/oder Regeleinheit 50a zu einer automatischen Aktivierung des Energiesparmodus auswertbar. Hierbei kann die bedienerspezifische Kenngröße als Bedienerandrückkraft, als Bedienervorschubkraft, als Bedienerhaltekraft, als bedienerspezifische Belastungsart, als Bedieneranwendungsfall, als Bedieneranpressdruck, eine Position zumindest einer Hand des Bedieners usw., oder als eine andere, einem Fachmann als sinnvoll erscheinende bedienerspezifische Kenngröße ausgebildet sein. Bevorzugt ist die bedienerspezifische Kenngröße als Bedieneranpressdruck ausgebildet. Zu einer Erfassung der bedienerspezifischen Kenngröße umfasst die Bedienersensoreinheit 66a zumindest ein Bedienersensorelement 68a. Das Bedienersensorelement 68a ist am Haupthandgriff 40a angeordnet. Hierbei ist das Bedienersensorelement 68a als Druckerfassungsfolie ausgebildet. Das Bedienersensorelement 68a kann hierbei auch an einer Verbindungsstelle einer schwingungsgedämpften Grifffläche zum Haupthandgriff 40a angeordnet sein, um eine Durchbiegung an der Verbindungsstelle zu erfassen, die zu einer Ermittlung eines Bedieneranpressdrucks nutzbar ist. Somit ist mittels des Bedienersensorelements 68a ein Bedieneranpressdruck erfassbar. Alternativ oder zusätzlich umfasst die Bedienersensoreinheit 66a zumindest ein weiteres Bedienersensorelement 70a zu einer Ermittlung eines Bedieneranpressdrucks. Das weitere Bedienersensorelement 70a ist hierbei als Drucksensor ausgebildet, der im Bereich einer Lagerstelle des als Abtriebsspindel ausgebildeten Abtriebselements der Abtriebseinheit 32a angeordnet ist. Hierbei ist das weitere Bedienersensorelement 70a als Dehnmessstreifen ausgebildet, der eine elastische Verformung im Bereich der Lagerstelle erfasst. Hieraus ist mittels der Steuer- und/oder Regeleinheit 50a ein Bedieneranpressdruck ermittelbar. Es ist jedoch auch denkbar, dass das weitere Bedienersensorelement 70a als Wälzlagerelement mit integrierter Krafterfassungssensorik ausgebildet ist.

Die Steuer- und/oder Regeleinheit 50a ist dazu vorgesehen, einen Bedieneranpressdruck während eines gesamten Betriebs der Handwerkzeugmaschine 10a zu erfassen und daraus erhaltene Messwerte über einen Zeitraum von maximal 5 sec zu mitteln. Hierdurch ist auswertbar, ob ein Bediener bei einer Bearbeitung eines Werkstücks eine hohe Leistung fordert oder ob eine energieeffiziente Bearbeitung bevorzugt ist. Infolge einer Erfassung eines Bedieneranpressdrucks als Eingangsgröße, ist eine maximale Leistung im Energiesparmodus bestimmbar, da hier eine Stellgröße ungleich einer Eingangsgröße ist. Zu einer Berücksichtigung eines Reibwerts und anderen spezifischen Größen des Bearbeitungswerkzeugs 36a ist es vorteilhaft, den Bedieneranpressdruck nach einem Beginn einer Bearbeitung eines Werkstücks für einen Zeitraum von wenigen Sekunden in ein Verhältnis zu einer Leistung der Handwerkzeugmaschine 10a zu setzen. Beispielsweise führt ein kleiner Reibbeiwert zu einer kleinen Leistung bei einem hohen Bedieneranpressdruck. Zudem kann eine Messung des Verhältnisses und/oder des Bedieneranpressdrucks in Intervallen während eines Betriebs vorteilhaft zu einer Verschleißermittlung des Bearbeitungswerkzeugs 36a herangezogen werden. Ein Faktor aus dem Verhältnis zwischen dem Bedieneranpressdruck und einer Leistung ist vorteilhaft zu einer automatischen Betriebsmoduswahl durch die Steuer- und/oder Regeleinheit 50a berücksichtigbar.

Zu einer Steigerung einer Effizienz ist im Energiesparmodus der Handwerkzeugmaschine 10a eine Leerlaufdrehzahl der Antriebseinheit 30a mittels der Steuer- und/oder Regeleinheit 50a begrenzbar. Hierbei ist die Leerlaufdrehzahl auf einen Wert begrenzbar, bei dem die Antriebseinheit 30a mit optimalem Wirkungsgrad betreibbar ist. Eine optimale Drehzahl der Antriebseinheit 30a ist abhängig von einem Kennfeld der Antriebseinheit 30a. Der optimale Wirkungsgrad der Antriebseinheit 30a ist vorzugsweise in einem Drehzahlbereich von 55% bis 75% einer maximalen Drehzahl der Antriebseinheit 30a. Mittels einer reduzierten Leerlaufdrehzahl kann vorteilhaft Energie eingespart werden. Bei einer Bearbeitung eines Werkstücks mittels des Bearbeitungswerkzeugs 36a in einem Nennleistungsbereich, erreicht das Bearbeitungswerkzeug 36a eine Drehzahl, die kleiner ist als die maximale Leerlaufdrehzahl der Antriebseinheit 30a. Die Drehzahl des Bearbeitungswerkzeugs 36a ist hierbei abhängig von einem Bedieneranpressdruck. Somit kann eine Drehzahl während einer Bearbeitung eines Werkstücks zwischen einer Leerlaufdrehzahl und einer Lastdrehzahl schwanken. Eine Beschleunigung des Bearbeitungswerkzeugs 36a auf die Leerlaufdrehzahl nach einem Absetzen der Handwerkzeugmaschine 10a von einem Werkstück benötigt viel Energie, die einsparbar ist, indem die Leerlaufdrehzahl derart begrenzt wird, dass die Leerlaufdrehzahl möglichst nahe am optimalen Arbeitspunkt der Handwerkzeugmaschine 10a liegt. Als Zusatzfunktion ist es denkbar, dass die Steuer- und/oder Regeleinheit 50a lernt, in welchem Arbeitspunkt ein Bediener arbeitet und anhand dessen eine optimale Leerlaufdrehzahl bestimmbar ist, bei der sich der geringste Unterschied zu einer durchschnittlichen Lastdrehzahl ergibt. Hierdurch kann vorteilhaft eine zumindest im Wesentlichen konstante Drehzahl über einen gesamten Bearbeitungseinsatz erreicht werden. Eine Kombination einer Leistungsbegrenzung und einer Drehzahlbegrenzung ermöglicht vorteilhaft im Energiesparmodus einen optimierten Wirkungsgrad bei einem geringen Verbrauch.

Ferner ist im Energiesparmodus eine Luftführung der Lüftereinheit der Handwerkzeugmaschine 10a mittels der Steuer- und/oder Regeleinheit 50a optimierbar, so dass eine geringe Leistung für eine Lüftung und/oder Kühlung aufwendbar ist. Weiter ist es denkbar, mehrere Lüftereinheiten zu verwenden, die in Abhängigkeit von einem Kühlleistungsbedarf mittels der Steuer- und/oder Regeleinheit 50a steuerbar und/oder regelbar sind. Somit erfolgt vorteilhaft eine Kühlung in Bereichen, die eine vorgegebene Temperaturgrenze überschritten haben. Hierzu sind Lüftereinheiten beispielsweise an Leistungstransistoren, an der Antriebseinheit 30a, an einer Grifffläche usw. angeordnet. Es ist jedoch auch denkbar, dass die Handwerkzeugmaschine 10a mehrere Heatpipes, mehrere geregelte und/oder gesteuerte Klappen usw. zu einer Steuerung und/oder Regelung eines Kühlleistungsbedarfs umfasst.

Ferner ist im aktivierten Energiesparmodus eine Getriebeübersetzung der Abtriebseinheit 32a anpassbar. Durch eine Veränderung einer Getriebeübersetzung kann vorteilhaft bewirkt werden, dass die Antriebseinheit 30a bei gleichbleibender Bedieneranpresskraft und somit benötigtem Drehmoment an dem als Abtriebsspindel ausgebildeten Abtriebselement in einem vorteilhaften Wirkungsgrad betreibbar ist. Zu einer Ermöglichung einer Getriebeübersetzung kann die Abtriebseinheit 32a beispielsweise als Riementrieb mit verstellbaren Kegelscheiben, als Schubgliederbandgetriebe, als Kegelringgetriebe o. dgl. ausgebildet sein.

Des Weiteren ist im Energiesparmodus der Handwerkzeugmaschine 10a eine Schaltfrequenz eines Umrichters (hier nicht näher dargestellt) der Antriebseinheit 30a mittels der Steuer- und/oder Regeleinheit 50a anpassbar. Der Umrichter zu einer Ansteuerung der Antriebseinheit 30a weist zumindest einen Leistungstransistor, wie beispielsweise einen MosFET oder einen IGBT, auf, der aus einer Gleichspannung mit einer hohen Schaltfrequenz einen pulsweitenmodulierten Wechselstrom erzeugt. Durch Induktivitäten von Motorwicklungen der Antriebseinheit 30a ist der pulsweitenmodulierte Wechselstrom glättbar. Hierdurch ist ein sinusförmiger Wechselstrom mit variabler Frequenz und Spannung erzeugbar, der dazu vorgesehen ist, ein Drehfeld zu einem Antrieb der Antriebseinheit 30a zu erzeugen. Übliche Schaltfrequenzen für den Leistungstransistor sind 2 kHz, 4 kHz, 8 kHz, 16 kHz, 20 kHz und 24 kHz. Die hohen Schaltfrequenzen von 16 kHz bis 24 kHz liegen vorteilhaft außerhalb eines menschlichen Hörbereichs und erzeugen somit vorteilhaft geringe Lärmemissionen. Die hohen Schaltfrequenzen sind zu einer Erzeugung einer Sinusfrequenz für das Drehfeld der Antriebseinheit 30a vorteilhaft nutzbar. Eine minimale Schaltfrequenz für das Drehfeld ist hierbei proportional zu einer Anzahl an Polen der Antriebseinheit 30a und zu einer maximalen Drehzahl der Antriebseinheit 30a. Im Energiesparmodus sind die Schaltfrequenzen des Leistungstransistors mittels der Steuer- und/oder Regeleinheit 50a auf einen Wert absenkbar, der geringer ist als eine normale Schaltfrequenz, da gleichzeitig eine maximale Drehzahl der Antriebseinheit 30a im Energiesparmodus absenkbar ist. Ein Wirkungsgrad des Umrichters und somit der Handwerkzeugmaschine 10a kann somit vorteilhaft erhöht werden, da die Verlustleistung der Leistungselektronik gesenkt wird.

Die Handwerkzeugmaschine 10a umfasst ferner zumindest eine Kommunikationseinheit 72a zu einer Übertragung von elektrischen und/oder elektronischen Daten an eine und/oder von einer externen Einheit (hier nicht näher dargestellt). Die externe Einheit kann hierbei als Staubsauger ausgebildet sein. Die Handwerkzeugmaschine 10a ist mittels einer am Staubsauger angeordneten Steckdose mit Energie versorgbar. Der Staubsauger erkennt über die Kommunikationseinheit 72a eine Inbetriebnahme der Handwerkzeugmaschine 10a und wird dadurch ebenfalls aktiviert. Mittels der Kommunikationseinheit 72a sind zudem weitere Handwerkzeugmaschinenkenngrößen an den Staubsauger übertragbar. Somit ist der Staubsauger in Abhängigkeit zumindest einer Handwerkzeugmaschinenkenngröße über die Kommunikationseinheit 72a mittels der Steuer- und/oder Regeleinheit 50a ansteuerbar. Die Kommunikationseinheit 72a ist vorzugsweise als kabellose Kommunikationseinheit ausgebildet. Hierbei kann die Kommunikationseinheit 72a als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit, als Zigbee-Kommunikationseinheit o. dgl. ausgebildet sein. Besonders bevorzugt ist die Kommunikationseinheit 72a zu einer bidirektionalen Datenübertragung vorgesehen. In einer alternativen Ausgestaltung ist die Kommunikationseinheit 72a als kabelgebundene Kommunikationseinheit ausgebildet, wie beispielsweise als LAN-Kommunikationseinheit, als USB-Kommunikationseinheit, als PowerlineTechnik-Kommunikationseinheit o. dgl. Es ist jedoch auch denkbar, dass der Staubsauger einen Stromsensor aufweist, der zu einer Erfassung einer Stromstärke der angeschlossenen Handwerkzeugmaschine 10a vorgesehen ist. Anhand der erfassten Stromstärke ist beispielsweise eine Leistung des Staubsaugers automatisch anpassbar oder ein Betriebsmodus des Staubsaugers ist automatisch auswählbar. Ein Energiesparmodus des Staubsaugers ist in Abhängigkeit von einer gemessenen Stromstärke automatisch aktivierbar. Hierbei ist der Energiesparmodus des Staubsaugers aktivierbar, sobald sich eine erfasste Stromstärke der am Staubsauger angeschlossenen Handwerkzeugmaschine 10a für mindestens 2,5 Sekunden nicht oder nur um +/- 5 % ändert. Bei Aktivierung des Energiesparmodus des Staubsaugers ist eine Leistung zu einer Einsparung von Energie drosselbar. Bei einer Erfassung einer Änderung der Stromstärke um mindestens 15 % ist eine Leistung des Staubsaugers erhöhbar.

Die einzelnen Zustände und/oder Betriebsmodi der Handwerkzeugmaschine 10a sind mittels der Anzeigeeinheit 20a an einen Bediener ausgebbar. Ein Bediener ist somit komfortabel auf den Zustand der Handwerkzeugmaschine 10a hinweisbar. Es kann somit vorteilhaft ein hoher Bedienkomfort erreicht werden.

Figuren 3 bis 7 zeigen weitere Ausführungsbeispiele der Erfindung. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 7 ist der Buchstabe a entsprechend dem Ausführungsbeispiel durch einen Buchstaben aus der Buchstabenfolge b bis f ersetzt.

Figur 3 zeigt eine alternative Ausgestaltung einer elektrischen und/oder elektronischen Anzeigeeinheit 20b. Die elektrische und/oder elektronische Anzeigeeinheit 20b ist hierbei Teil einer lediglich teilweise dargestellten Handwerkzeugmaschine 10b. Die Handwerkzeugmaschine 10b weist eine zumindest im Wesentlichen analoge Ausgestaltung zu der in der Beschreibung der Figuren 1 und 2 beschriebenen Handwerkzeugmaschine 10a auf. Somit umfasst die Handwerkzeugmaschine 10b zumindest eine Gehäuseeinheit 12b, die zumindest ein Gehäuseelement 14b, zumindest ein weiteres Gehäuseelement 16b und zumindest ein Gehäuseverbindungselement 18b, das das Gehäuseelement 14b und das weitere Gehäuseelement 16b miteinander verbindet, aufweist, und zumindest die elektrische und/oder elektronische Anzeigeeinheit 20b, die zumindest ein zumindest teilweise umfänglich angeordnetes Anzeigeelement 22b zu einer Anzeige zumindest einer Handwerkzeugmaschinenkenngröße aufweist. Das Gehäuseelement 14b ist hierbei als Motorgehäuse der Handwerkzeugmaschine 10b ausgebildet. Das weitere Gehäuseelement 16b ist als Getriebegehäuse der Handwerkzeugmaschine 10b ausgebildet. Das Anzeigeelement 22b ist zumindest teilweise einteilig mit dem Gehäuseverbindungselement 18b ausgebildet. Hierbei bildet das Anzeigeelement 22b das Gehäuseverbindungselement 18b. Somit ist das Gehäuseelement 14b mittels des Anzeigeelements 22b am weiteren Gehäuseelement 16b fixiert. Hierzu ist das Anzeigeelement 22b zu einer Verbindung des Gehäuseelements 14b und des weiteren Gehäuseelements 16b stoffschlüssig am Gehäuseelement 14b fixiert. Das Anzeigeelement 22b ist mittels eines Zweikomponenten-Spritzgussverfahrens stoffschlüssig am Gehäuseelement 14b fixiert. Hierbei weist das Gehäuseelement 14b zumindest einen Stoffschlusshaltefortsatz 74b auf, der mittels des Anzeigeelements 22b umspritzt ist. Ferner ist das Anzeigeelement 22b zu einer Verbindung des Gehäuseelements 14b und des weiteren Gehäuseelements 16b stoffschlüssig am weiteren Gehäuseelement 16b fixiert. Hierbei kann das Anzeigeelement 22b mittels eines Klebeverfahrens, mittels eines Spritzgussverfahrens, mittels eines Schweißverfahrens o. dgl. stoffschlüssig mit dem weiteren Gehäuseelement 16b verbunden sein. Es ist jedoch auch denkbar, dass das Anzeigeelement 22b alternativ zumindest einen Fixierungsfortsatz aufweist, der zu einer formschlüssigen und/oder kraftschlüssigen Verbindung mit dem weiteren Gehäuseelement 16b vorgesehen ist. Hinsichtlich weiterer Merkmale und Funktionen der Handwerkzeugmaschine 10b und/oder der Anzeigeeinheit 20b darf auf die in der Beschreibung der Figuren 1 und 2 beschriebene Handwerkzeugmaschine 10a und/oder beschriebene Anzeigeeinheit 20a verwiesen werden.

Figur 4 zeigt eine alternative Ausgestaltung einer elektrischen und/oder elektronischen Anzeigeeinheit 20c. Die elektrische und/oder elektronische Anzeigeeinheit 20c ist hierbei Teil einer lediglich teilweise dargestellten Handwerkzeugmaschine 10c. Die Handwerkzeugmaschine 10c weist eine zumindest im Wesentlichen analoge Ausgestaltung zu der in der Beschreibung den Figuren 1 und 2 beschriebenen Handwerkzeugmaschine 10a auf. Somit umfasst die Handwerkzeugmaschine 10c zumindest eine Gehäuseeinheit 12c, die zumindest ein Gehäuseelement 14c, zumindest ein weiteres Gehäuseelement 16c und zumindest ein Gehäuseverbindungselement 18c, das das Gehäuseelement 14c und das weitere Gehäuseelement 16c miteinander verbindet, aufweist, und zumindest die elektrische und/oder elektronische Anzeigeeinheit 20c, die zumindest ein zumindest teilweise umfänglich angeordnetes Anzeigeelement 22c zu einer Anzeige zumindest einer Handwerkzeugmaschinenkenngröße aufweist. Das Gehäuseelement 14c ist hierbei als Motorgehäuse der Handwerkzeugmaschine 10c ausgebildet. Das weitere Gehäuseelement 16c ist als Getriebegehäuse der Handwerkzeugmaschine 10c ausgebildet. Das Anzeigeelement 22c ist zumindest teilweise einteilig mit dem Gehäuseverbindungselement 18c ausgebildet. Hierbei bildet das Anzeigeelement 22c das Gehäuseverbindungselement 18c. Somit ist das Gehäuseelement 14c mittels des Anzeigeelements 22c am weiteren Gehäuseelement 16c fixiert. Das Anzeigeelement 22c ist zu einer Verbindung des Gehäuseelements 14c und des weiteren Gehäuseelements 16c formschlüssig und/oder kraftschlüssig am Gehäuseelement 14c fixierbar. Hierzu weist das Anzeigeelement 22c zumindest einen Formschlussfortsatz 24c auf, der zu einer Fixierung des Gehäuseelements 14c und des weiteren Gehäuseelements 16c mit einem korrespondierenden Formschlussfortsatz 26c des Gehäuseelements 14c zusammenwirkt. Der Formschlussfortsatz 24c des Anzeigeelements 22c ist hierbei als Rasthaken ausgebildet. Hierbei ist der Formschlussfortsatz 24c des Anzeigeelements 22c federelastisch ausgebildet. Somit ist das Anzeigeelement 22c mittels des Formschlussfortsatzes 24c des Anzeigeelements 22c lösbar mit dem Gehäuseelement 14c verbindbar. Ferner ist das Anzeigeelement 22c stoffschlüssig mit dem weiteren Gehäuseelement 16c verbunden. Hinsichtlich weiterer Merkmale und Funktionen der Handwerkzeugmaschine 10c und/oder der Anzeigeeinheit 20c darf auf die in der Beschreibung der Figuren 1 und 2 beschriebene Handwerkzeugmaschine 10a und/oder beschriebene Anzeigeeinheit 20a verwiesen werden.

Figur 5 zeigt eine alternative Ausgestaltung einer elektrischen und/oder elektronischen Anzeigeeinheit 20d. Die elektrische und/oder elektronische Anzeigeeinheit 20d ist hierbei Teil einer lediglich teilweise dargestellten Handwerkzeugmaschine 10d. Die Handwerkzeugmaschine 10d weist eine zumindest im Wesentlichen analoge Ausgestaltung zu der in der Beschreibung den Figuren 1 und 2 beschriebenen Handwerkzeugmaschine 10a auf. Somit umfasst die Handwerkzeugmaschine 10d zumindest eine Gehäuseeinheit 12d, die zumindest ein Gehäuseelement 14d, zumindest ein weiteres Gehäuseelement 16d und zumindest ein Gehäuseverbindungselement 18d, das das Gehäuseelement 14d und das weitere Gehäuseelement 16d miteinander verbindet, aufweist, und zumindest die elektrische und/oder elektronische Anzeigeeinheit 20d, die zumindest ein zumindest teilweise umfänglich angeordnetes Anzeigeelement 22d zu einer Anzeige zumindest einer Handwerkzeugmaschinenkenngröße aufweist. Das Gehäuseelement 14d ist hierbei als Motorgehäuse der Handwerkzeugmaschine 10d ausgebildet. Das weitere Gehäuseelement 16d ist als Getriebegehäuse der Handwerkzeugmaschine 10d ausgebildet.

Das Anzeigeelement 22d ist zumindest teilweise einteilig mit dem Gehäuseverbindungselement 18d ausgebildet. Hierbei bildet das Anzeigeelement 22d das Gehäuseverbindungselement 18d. Das Anzeigeelement 22d ist zu einer Verbindung des Gehäuseelements 14d und des weiteren Gehäuseelements 16d formschlüssig und/oder kraftschlüssig am Gehäuseelement 14d und am weiteren Gehäuseelement 16d fixierbar. Hierzu weist das Anzeigeelement 22d zumindest einen Formschlussfortsatz 24d auf, der zu einer Fixierung des Gehäuseelements 14d und des weiteren Gehäuseelements 16d mit einem korrespondierenden Formschlussfortsatz 26d des Gehäuseelements 14d zusammenwirkt. Der Formschlussfortsatz 24d des Anzeigeelements 22d ist hierbei als Rasthaken ausgebildet. Hierbei ist der Formschlussfortsatz 24d des Anzeigeelements 22d federelastisch ausgebildet. Somit ist das Anzeigeelement 22d mittels des Formschlussfortsatz 24d des Anzeigeelements 22d lösbar mit dem Gehäuseelement 14d verbindbar. Der Formschlussfortsatz 26d des Gehäuseelements 14d kann hierbei als Rastausnehmung, als korrespondierender Rasthaken oder als ein anderes, einem Fachmann als sinnvoll erscheinendes Rastelement ausgebildet sein. Ferner weist das Anzeigeelement 22d zumindest einen weiteren Formschlussfortsatz 24d auf, der zu einer Fixierung des Gehäuseelements 14d und des weiteren Gehäuseelements 16d mit einem korrespondierenden Formschlussfortsatz 78d des weiteren Gehäuseelements 16d zusammenwirkt. Der weitere Formschlussfortsatz 76d des Anzeigeelements 22d ist hierbei als Rasthaken ausgebildet. Hierbei ist der weitere Formschlussfortsatz 76d des Anzeigeelements 22d federelastisch ausgebildet. Somit ist das Anzeigeelement 22d mittels des weiteren Formschlussfortsatzes 76d des Anzeigeelements 22d lösbar mit dem weiteren Gehäuseelement 16d verbindbar. Der Formschlussfortsatz 78d des weiteren Gehäuseelements 16d kann hierbei als Rastausnehmung, als korrespondierender Rasthaken oder als ein anderes, einem Fachmann als sinnvoll erscheinendes Rastelement ausgebildet sein.

Das Anzeigeelement 22d ist als elektrisches und/oder elektronisches Grafikanzeigeelement ausgebildet. Hierbei ist das elektrische und/oder elektronische Grafikanzeigeelement zumindest fünfzeilig ausgebildet. Das Anzeigeelement 22d umfasst somit zumindest eine Leiterplatte 58d und zumindest ein Leuchtelement 52d. Insgesamt umfasst das als elektrische und/oder elektronische Grafikanzeigeelement ausgebildete Anzeigeelement 22d eine Vielzahl an Leuchtelementen 52d, die an der Leiterplatte 58d angeordnet sind. Hierbei bilden die Leuchtelemente 52d zusammen zumindest fünf Zeilen des als elektrisches und/oder elektronisches Grafikanzeigeelement ausgebildeten Anzeigeelements 22d. Zudem sind der Formschlussfortsatz 24d und der weitere Formschlussfortsatz 76d des Anzeigeelements 22d an der Leiterplatte 58d angeordnet. Die Leiterplatte 58d ist als flexible Leiterplatte ausgebildet. Zudem weist das Anzeigeelement 22d zumindest ein Schutzelement 80d auf. Das Schutzelement 80d ist insbesondere dazu vorgesehen, die Leuchtelemente 52d und/oder die Leiterplatte 58d vor Beschädigungen und/oder vor Verschmutzungen zu schützen. Das Schutzelement 80d ist transparent ausgebildet. Somit sind die Leuchtelemente 52d durch das Schutzelement 80d erkennbar. Hierbei ist das Schutzelement 80d als Silikonverguss ausgebildet. Das Schutzelement 80d kann hierbei lediglich auf der Seite der Leiterplatte 58d angeordnet sein, auf der die Leuchtelemente 52d angeordnet sind oder das Schutzelement 80d umgibt die gesamte Leiterplatte 58d. In einem an der Gehäuseeinheit 12d angeordneten Zustand weist das Anzeigeelement 22d eine kreisringförmige Ausgestaltung auf. Hinsichtlich weiterer Merkmale und Funktionen der Handwerkzeugmaschine 10d und/oder der Anzeigeeinheit 20d darf auf die in der Beschreibung der Figuren 1 und 2 beschriebene Handwerkzeugmaschine 10a und/oder beschriebene Anzeigeeinheit 20a verwiesen werden.

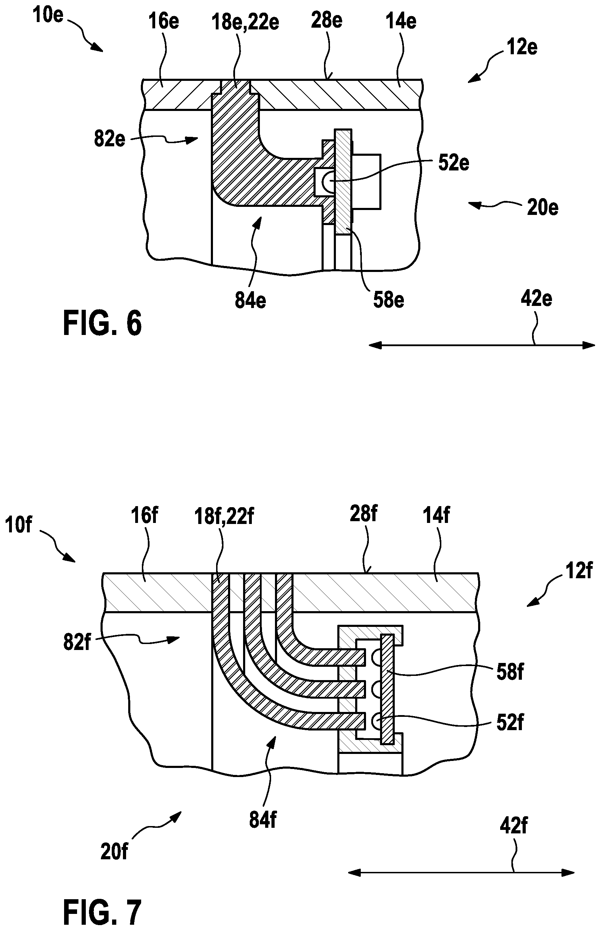

Figur 6 zeigt eine alternative Ausgestaltung einer elektrischen und/oder elektronischen Anzeigeeinheit 20e. Die elektrische und/oder elektronische Anzeigeeinheit 20e ist hierbei Teil einer lediglich teilweise dargestellten Handwerkzeugmaschine 10e. Die Handwerkzeugmaschine 10e weist eine zumindest im Wesentlichen analoge Ausgestaltung zu der in der Beschreibung den Figuren 1 und 2 beschriebenen Handwerkzeugmaschine 10a auf. Somit umfasst die Handwerkzeugmaschine 10e zumindest eine Gehäuseeinheit 12e, die zumindest ein Gehäuseelement 14e, zumindest ein weiteres Gehäuseelement 16e und zumindest ein Gehäuseverbindungselement 18e, das das Gehäuseelement 14e und das weitere Gehäuseelement 16e miteinander verbindet, aufweist, und zumindest die elektrische und/oder elektronische Anzeigeeinheit 20e, die zumindest ein zumindest teilweise umfänglich angeordnetes Anzeigeelement 22e zu einer Anzeige zumindest einer Handwerkzeugmaschinenkenngröße aufweist. Das Gehäuseelement 14e ist hierbei als Motorgehäuse der Handwerkzeugmaschine 10e ausgebildet. Das weitere Gehäuseelement 16e ist als Getriebegehäuse der Handwerkzeugmaschine 10e ausgebildet. Das Anzeigeelement 22e ist zumindest teilweise einteilig mit dem Gehäuseverbindungselement 18e ausgebildet. Hierbei bildet das Anzeigeelement 22e das Gehäuseverbindungselement 18e. Das Anzeigeelement 22e ist zu einer Verbindung des Gehäuseelements 14e und des weiteren Gehäuseelements 16e formschlüssig und/oder kraftschlüssig am Gehäuseelement 14e und/oder am weiteren Gehäuseelement 16e fixierbar.

Das Anzeigeelement 22e ist kreisringförmig ausgebildet. Zudem weist das Anzeigeelement 22e zumindest zwei relativ zueinander abgewinkelte Schenkelkreisringbereiche 82e, 84e auf. Einer der Schenkelkreisringbereiche 82e, 84e erstreckt sich zumindest im Wesentlichen parallel zu einer Haupterstreckungsrichtung 42e der Handwerkzeugmaschine 10e und einer der Schenkelkreisringbereiche 82e, 84e erstreckt sich zumindest im Wesentlichen quer zur Haupterstreckungsrichtung 42e der Handwerkzeugmaschine 10e. Somit ist einer der Schenkelkreisringbereiche 82e, 84e formschlüssig und/oder kraftschlüssig am Gehäuseelement 14e und/oder am weiteren Gehäuseelement 16e fixierbar, und der andere der Schenkelkreisringbereiche 82e, 84e ist mit einer Leiterplatte 58e der Anzeigeeinheit 20e verbindbar, an der zumindest ein Leuchtelement 52e der Anzeigeeinheit 20e zu einer Beleuchtung des Anzeigeelements 22e angeordnet ist. Hinsichtlich weiterer Merkmale und Funktionen der Handwerkzeugmaschine 10e und/oder der Anzeigeeinheit 20e darf auf die in der Beschreibung der Figuren 1 und 2 beschriebene Handwerkzeugmaschine 10a und/oder beschriebene Anzeigeeinheit 20a verwiesen werden.

Figur 7 zeigt eine alternative Ausgestaltung einer elektrischen und/oder elektronischen Anzeigeeinheit 20f. Hierbei weist die elektrische und/oder elektronische Anzeigeeinheit 20f eine zumindest im Wesentlichen analoge Ausgestaltung zu der in der Beschreibung der Figur 6 beschriebenen elektrischen und/oder elektronischen Anzeigeeinheit 20e auf. Im Unterschied zu der in der Beschreibung der Figur 6 beschriebenen elektrischen und/oder elektronischen Anzeigeeinheit 20e weist die elektrische und/oder elektronische Anzeigeeinheit 20f eine Vielzahl an Anzeigeelementen 22f auf, die kreisringförmig ausgebildet sind und jeweils zumindest zwei relativ zueinander abgewinkelte Schenkelkreisringbereiche 82f, 84f aufweisen. Die Vielzahl an Anzeigeelementen 22f bildet insbesondere zusammen mit einer Leiterplatte 58f der Anzeigeeinheit 20f und den darauf angeordneten Leuchtelementen 52f ein elektrisches und/oder elektronisches Grafikanzeigeelement der Anzeigeeinheit 20f. Hierbei ist es denkbar, dass die Anzeigeelemente 22f sich einzeln durch Ausnehmungen in einem Gehäuseelement 14f und/oder in einem weiteren Gehäuseelement 16f hindurch erstrecken oder zu einer Verbindung des Gehäuseelements 14f und/oder des weiteren Gehäuseelement 16f mittels eines Anzeigeelementeaufnahmeelements der Anzeigeeinheit 20f miteinander verbunden sind. Hinsichtlich weiterer Merkmale und Funktionen der Handwerkzeugmaschine 10f und/oder der Anzeigeeinheit 20f darf auf die in der Beschreibung der Figuren 1 und 2 beschriebene Handwerkzeugmaschine 10a und/oder beschriebene Anzeigeeinheit 20a verwiesen werden.

## Patentansprüche

1. Handwerkzeugmaschine mit zumindest einer Gehäuseeinheit (12a; 12b; 12c; 12d; 12e; 12f), die zumindest ein Gehäuseelement (14a; 14b; 14c; 14d; 14e; 14f), zumindest ein weiteres Gehäuseelement (16a; 16b; 16c; 16d; 16e; 16f) und zumindest ein Gehäuseverbindungselement (18a; 18b; 18c; 18d; 18e; 18f), das das Gehäuseelement (14a; 14b; 14c; 14d; 14e; 14f) und das weitere Gehäuseelement (16a; 16b; 16c; 16d; 16e; 16f) miteinander verbindet, aufweist, und mit zumindest einer elektrischen und/oder elektronischen Anzeigeeinheit (20a; 20b; 20c; 20d; 20e; 20f), die zumindest ein umfänglich angeordnetes Anzeigeelement (22a; 22b; 22c; 22d; 22e; 22f) zu einer Anzeige zumindest einer Handwerkzeugmaschinenkenngröße aufweist, wobei zumindest das Anzeigeelement (22a; 22b; 22c; 22d; 22e; 22f) zumindest teilweise einteilig mit dem Gehäuseverbindungselement (18a; 18b; 18c; 18d; 18e; 18f) ausgebildet ist, **dadurch gekennzeichnet, dass** sich das Anzeigeelement (22a; 22b; 22c; 22e; 22f), betrachtet entlang einer zumindest im Wesentlichen quer zu einer Verbindungsrichtung der Gehäuseeinheit (12a; 12b; 12c; 12e; 12f) verlaufenden Richtung, durch das Gehäuseelement (14a; 14b; 14c; 14e; 14f) und/oder durch das weitere Gehäuseelement (16a; 16b; 16c; 16e; 16f) hindurch erstreckt.

2. Handwerkzeugmaschine nach Anspruch 1, **dadurch gekennzeichnet, dass** das Anzeigeelement (22a; 22b; 22c; 22d; 22e; 22f) zu einer Verbindung des Gehäuseelements (14a; 14b; 14c; 14d; 14e; 14f) und des weiteren Gehäuseelements (16a; 16b; 16c; 16d; 16e; 16f) formschlüssig und/oder kraftschlüssig am Gehäuseelement (14a; 14b; 14c; 14d; 14e; 14f) und/oder am weiteren Gehäuseelement (16a; 16b; 16c; 16d; 16e; 16f) fixierbar ist.

3. Handwerkzeugmaschine nach Anspruch 2, **dadurch gekennzeichnet, dass** das Anzeigeelement (22c; 22d; 22e) zumindest einen Formschlussfortsatz (24c; 24d; 24e) aufweist, der zu einer Fixierung des Gehäuseelements (14c; 14d; 14e) und des weiteren Gehäuseelements (16c; 16d; 16e) mit einem korrespondierenden Formschlussfortsatz (26c; 26d; 26e) des Gehäuseelements (14c; 14d; 14e) und/oder des weiteren Gehäuseelements (16c; 16d; 16e) zusammenwirkt.

4. Handwerkzeugmaschine nach einem der vorhergehenden Ansprüche, **dadurch gekennzeichnet, dass** das Anzeigeelement (22b; 22c; 22d; 22e) zu einer Verbindung des Gehäuseelements (14b; 14c; 14d; 14e) und des weiteren Gehäuseelements (16b; 16c; 16d; 16e) stoffschlüssig am Gehäuseelement (14b; 14c; 14d; 14e) und/oder am weiteren Gehäuseelement (16b; 16c; 16d; 16e) fixiert ist.

5. Handwerkzeugmaschine nach einem der vorhergehenden Ansprüche, insbesondere nach dem Oberbegriff des Anspruchs 1, **dadurch gekennzeichnet, dass** das Anzeigeelement (22d) als elektrisches und/oder elektronisches Grafikanzeigeelement ausgebildet ist.

6. Handwerkzeugmaschine nach Anspruch 6, **dadurch gekennzeichnet, dass** das elektrische und/oder elektronische Grafikanzeigeelement zumindest fünfzeilig ausgebildet ist.

7. Handwerkzeugmaschine nach einem der vorhergehenden Ansprüche, **dadurch gekennzeichnet, dass** das Anzeigeelement (22a; 22b; 22c; 22d; 22e; 22f) abtriebsnah an der Gehäuseeinheit (12a; 12b; 12c; 12d; 12e; 12f) angeordnet ist.

8. Handwerkzeugmaschine nach einem der vorhergehenden Ansprüche, **dadurch gekennzeichnet, dass** sich das Anzeigeelement (22a; 22b; 22c; 22d; 22e; 22f) zumindest zu 25 % einer maximalen Gesamtumfangserstreckung der Gehäuseeinheit (12a; 12b; 12c; 12d; 12e; 12f) um die Gehäuseeinheit (12a; 12b; 12c; 12d; 12e; 12f) erstreckt.

9. Handwerkzeugmaschine nach einem der vorhergehenden Ansprüche, **dadurch gekennzeichnet, dass** das Anzeigeelement (22a; 22b; 22c; 22d; 22e; 22f) zumindest im Wesentlichen bündig mit einer Außenfläche (28a; 28b; 28c; 28d; 28e; 28f) der Gehäuseeinheit (12a; 12b; 12c; 12d; 12e; 12f) abschließt.

## Claims

1. Handheld power tool having at least one housing unit (12a; 12b; 12c; 12d; 12e; 12f) which has at least one housing element (14a; 14b; 14c; 14d; 14e; 14f), at least one further housing element (16a; 16b; 16c; 16d; 16e; 16f) and at least one housing connecting element (18a; 18b; 18c; 18d; 18e; 18f) which connects the housing element (14a; 14b; 14c; 14d; 14e; 14f) and the further housing element (16a; 16b; 16c; 16d; 16e; 16f) to one another, and having at least one electrical and/or electronic indication unit (20a; 20b; 20c; 20d; 20e; 20f) which has at least one circumferentially arranged indication element (22a; 22b; 22c; 22d; 22e; 22f) for indicating at least one handheld power tool characteristic variable, wherein at least the indication element (22a; 22b; 22c; 22d; 22e; 22f) is formed at least partially integrally with the housing connecting element (18a; 18b; 18c; 18d; 18e; 18f), **characterized in that**, viewed along a direction running at least substantially perpendicular to a connecting direction of the housing unit (12a; 12b; 12c; 12e; 12f), the indication element (22a; 22b; 22c; 22e; 22f) extends through the housing element (14a; 14b; 14c; 14e; 14f) and/or through the further housing element (16a; 16b; 16c; 16e; 16f).

2. Handheld power tool according to Claim 1, **characterized in that**, to connect the housing element (14a; 14b; 14c; 14d; 14e; 14f) and the further housing element (16a; 16b; 16c; 16d; 16e; 16f), the indication element (22a; 22b; 22c; 22d; 22e; 22f) is fixable in positively locking and/or non-positively locking fashion to the housing element (14a; 14b; 14c; 14d; 14e; 14f) and/or to the further housing element (16a; 16b; 16c; 16d; 16e; 16f).

3. Handheld power tool according to Claim 2, **characterized in that** the indication element (22c; 22d; 22e) has at least one positive-locking projection (24c; 24d; 24e) which, to fix the housing element (14c; 14d; 14e) and the further housing element (16c; 16d; 16e), interacts with a corresponding positive-locking projection (26c; 26d; 26e) of the housing element (14c; 14d; 14e) and/or of the further housing element (16c; 16d; 16e) .

4. Handheld power tool according to one of the preceding claims, **characterized in that**, to connect the housing element (14b; 14c; 14d; 14e) and the further housing element (16b; 16c; 16d; 16e), the indication element (22b; 22c; 22d; 22e) is fixed cohesively to the housing element (14b; 14c; 14d; 14e) and/or to the further housing element (16b; 16c; 16d; 16e).

5. Handheld power tool according to one of the preceding claims, in particular according to the preamble of Claim 1, **characterized in that** the indication element (22d) is in the form of an electrical and/or electronic graphic indication element.

6. Handheld power tool according to Claim 6, **characterized in that** the electrical and/or electronic graphic indication element is of at least five-line configuration.

7. Handheld power tool according to one of the preceding claims, **characterized in that** the indication element (22a; 22b; 22c; 22d; 22e; 22f) is arranged on the housing unit (12a; 12b; 12c; 12d; 12e; 12f) close to an output.

8. Handheld power tool according to one of the preceding claims, **characterized in that** the indication element (22a; 22b; 22c; 22d; 22e; 22f) extends around the housing unit (12a; 12b; 12c; 12d; 12e; 12f) over at least 25% of a maximum overall circumferential extent of the housing unit (12a; 12b; 12c; 12d; 12e; 12f).

9. Handheld power tool according to one of the preceding claims, **characterized in that** the indication element (22a; 22b; 22c; 22d; 22e; 22f) terminates at least substantially flush with an outer surface (28a; 28b; 28c; 28d; 28e; 28f) of the housing unit (12a; 12b; 12c; 12d; 12e; 12f).

## Revendications

1. Outil manuel motorisé présentant au moins une unité de boîtier (12a; 12b; 12c; 12d; 12e; 12f) qui présente au moins un élément de boîtier (14a; 14b; 14c; 14d; 14e; 14f), au moins un autre élément de boîtier (16a; 16b; 16c; 16d; 16e; 16f) et au moins un élément (18a; 18b; 18c; 18d; 18e; 18f) de liaison des boîtiers qui relie l'un à l'autre l'élément de boîtier (14a; 14b; 14c; 14d; 14e; 14f) et l'autre élément de boîtier (16a; 16b; 16c; 16d; 16e; 16f), et présentant au moins une unité électrique et/ou électronique d'affichage (20a; 20b; 20c; 20d; 20e; 20f) qui présente au moins un élément d'affichage (22a; 22b; 22c; 22d; 22e; 22f) disposé à la périphérie et qui permet d'afficher au moins une grandeur caractéristique de l'outil manuel motorisé,
au moins l'élément d'affichage (22a; 22b; 22c; 22d; 22e; 22f) étant formé au moins d'un seul tenant avec l'élément (18a; 18b; 18c; 18d; 18e; 18f) de liaison des boîtiers,
**caractérisé en ce que**
l'élément d'affichage (22a; 22b; 22c; 22d; 22e; 22f), vu dans une direction qui s'étend essentiellement transversalement par rapport à la direction de liaison de l'unité de boîtier (12a; 12b; 12c; 12d; 12e; 12f) s'étend à travers l'élément de boîtier (14a; 14b; 14c; 14d; 14e; 14f) et/ou à travers l'autre élément de boîtier (16a; 16b; 16c; 16d; 16e; 16f).

2. Outil manuel motorisé selon la revendication 1, **caractérisé en ce que** l'élément d'affichage (22a; 22b; 22c; 22d; 22e; 22f) peut être fixé en correspondance géométrique et/ou en correspondance mécanique sur l'élément de boîtier (14a; 14b; 14c; 14d; 14e; 14f) et/ou sur l'autre élément de boîtier (16a; 16b; 16c; 16d; 16e; 16f) pour permettre de relier l'élément de boîtier (14a; 14b; 14c; 14d; 14e; 14f) et l'autre élément de boîtier (16a; 16b; 16c; 16d; 16e; 16f).

3. Outil manuel motorisé selon la revendication 2, **caractérisé en ce que** l'élément d'affichage (22c; 22d; 22e) présente au moins un appendice (24c; 24d; 24e) en correspondance géométrique qui coopère avec un appendice correspondant en correspondance géométrique (26c; 26d; 26e) de l'élément de boîtier (14c; 14d; 14e) et/ou de l'autre élément de boîtier (16c; 16d; 16e) pour fixer l'élément de boîtier (14c; 14d; 14e) et l'autre élément de boîtier (16c; 16d; 16e).

4. Outil manuel motorisé selon l'une des revendications précédentes, **caractérisé en ce que** l'élément d'affichage (22b; 22c; 22d; 22e) est fixé en correspondance de matière sur l'élément de boîtier (14b; 14c; 14d; 14e) et/ou sur l'autre élément de boîtier (16b; 16c; 16d; 16e) pour relier l'élément de boîtier (14b; 14c; 14d; 14e) et l'autre élément de boîtier (16b; 16c; 16d; 16e).

5. Outil manuel motorisé selon l'une des revendications précédentes, en particulier selon le préambule de la revendication 1, **caractérisé en ce que** l'élément d'affichage (22d) est configuré comme élément électrique et/ou électronique d'affichage graphique.

6. Outil manuel motorisé selon la revendication 6, **caractérisé en ce que** l'élément électrique et/ou électronique d'affichage graphique présente au moins cinq lignes.

7. Outil manuel motorisé selon l'une des revendications précédentes, **caractérisé en ce que** l'élément d'affichage (22a; 22b; 22c; 22d; 22e; 22f) est disposé sur l'unité de boîtier (12a; 12b; 12c; 12d; 12e; 12f) à proximité de la sortie de l'entraînement.

8. Outil manuel motorisé selon l'une des revendications précédentes, **caractérisé en ce que** l'élément d'affichage (22a; 22b; 22c; 22d; 22e; 22f) s'étend au moins sur 25 % de l'extension périphérique totale maximale de l'unité de boîtier (12a; 12b; 12c; 12d; 12e; 12f) autour de l'unité de boîtier (12a; 12b; 12c; 12d; 12e; 12f).

9. Outil manuel motorisé selon l'une des revendications précédentes, **caractérisé en ce que** l'élément d'affichage (22a; 22b; 22c; 22d; 22e; 22f) se raccorde au moins essentiellement à chant à la surface extérieure (28a; 28b; 28c; 28d; 28e; 28f) de l'unité de boîtier (12a; 12b; 12c; 12d; 12e; 12f).
